(19) Europäisches Patentamt
European Patent Office
Office européen des brevets

(11) **EP 2 346 202 B1**

(12) **EUROPEAN PATENT SPECIFICATION**

(45) Date of publication and mention
of the grant of the patent:
**19.06.2013 Bulletin 2013/25**

(51) Int Cl.:
**H04W 72/04** (2009.01)    **H04L 5/00** (2006.01)

(21) Application number: **10150633.5**

(22) Date of filing: **13.01.2010**

(54) **Method and device for determining information derived from a first and a second and a third parameter**

Verfahren und Vorrichtung zur Bestimmung von Informationen, die von einem ersten, einem zweiten und einem dritten Parameter abgeleitet sind

Procédé et dispositif pour déterminer les informations dérivées d'un premier, un deuxième et un troisième paramètre

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.07.2011 Bulletin 2011/29**

(73) Proprietors:
• **Mitsubishi Electric R&D Centre Europe B.V.**
**1119 NS  Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AT BE BG CH CY CZ DE DK EE ES FI GB GR HR HU IE IS IT LI LT LU LV MC MK MT NL NO PL PT RO SE SI SK SM TR**

(72) Inventors:
• **Ciochina, Cristina**
**35708, RENNES Cedex 7 (FR)**
• **Higashinaka, Masatsugu**
**35708, RENNNES Cedex 7 (FR)**
• **Brunel, Loïc**
**35708, RENNES Cedex 7 (FR)**

(74) Representative: **Maillet, Alain**
**Cabinet Le Guen Maillet**
**5, place Newquay**
**B.P. 70250**
**35802 Dinard Cedex (FR)**

(56) References cited:
**EP-A2- 2 136 503      WO-A1-2009/043208**

• "3rd Generation Partnership Project; Technical Specification Group Radio Access Network; Evolved Universal Terrestrial Radio Access (E-UTRA); Physical layer procedures (Release 8)" 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.8.0, 1 September 2009 (2009-09-01), pages 1-81, XP050377563
• ASUSTEK: "Non-contiguous uplink resource allocation for LTE-A" 3GPP DRAFT; R1-093881 NON-CONTIGUOUS UPLINK RESOURCE ALLOCATION FOR LTE-A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388385
• ZTE: "Uplink Non-contiguous Resource Allocation for LTE-Advanced" 3GPP DRAFT; R1-093803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388317

EP 2 346 202 B1

**Description**

The present invention relates generally to a method and a device for determining information derived from a first and a second parameters among three parameters which enable a mobile station to identify which resources of a wireless telecommunication network are allocated to the mobile station.

More precisely, the present invention is in the field of the signalling of resources of a wireless telecommunication network which are allocated to a mobile station.

Orthogonal Frequency-Division Multiplexing (OFDM) is based upon the principle of frequency-division multiplexing (FDM) and is implemented as a digital modulation scheme. The bit stream to be transmitted is split into several parallel bit streams, typically dozens to thousands. The available frequency spectrum is divided into several sub-channels, and each low-rate bit stream is transmitted over one subchannel by modulating a sub-carrier using a standard modulation scheme, for example PSK, QAM, etc. The sub-carrier frequencies are chosen so that the modulated data streams are orthogonal to each other, meaning that cross talk between the sub-channels is eliminated.

The primary advantage of OFDM is its ability to cope with severe channel conditions, for example, multipath and narrowband interference, without complex equalization filters. Channel equalization is simplified by using many slowly modulated narrowband signals instead of one rapidly modulated wideband signal.

A variation called DFT spread OFDM or SC-FDMA (Single Carrier Frequency-Division Multiple Access) has been developed. In this system, each symbol to be transmitted is spread over a set of transmitted frequencies by a DFT (Discrete Fourier Transform), the resulting signal is sent over a conventional OFDMA transmission system.

Actual implementation of coding/decoding are made either in the frequency domain or in the time domain while the implementation in the frequency domain may be preferred.

Sometimes, the used subcarriers cannot be allocated in a contiguous sub-band, but need to be separated into several clusters. This leads to Clustered SC-FDMA, which has the advantage of a more flexible subcarrier mapping with respect to localized SC-FDMA, leading to more scheduling gain and better multi-user multiplexing.

The patent application document EP 2 136 503 discloses a radio resource scheduling mechanism for uplink/downlink packet data transmission in a cellular orthogonal frequency division multiplexing (OFDM) wireless packet communication system. Virtual Resource Blocks VRBs and Physical Resource Blocks are managed by a mapping relationship between their respective indexes. This document further discloses a bitmap method and a compact method for allocating such VRBs.

The patent application document WO 2009/043208 discloses a resource allocation mechanism in which a sender determines a total number NRB of resources in a system. The sender then determines an amount LCRB of continuous resource blocks to be allocated to a given user equipment and an index RBstart of a starting resource block in the continuous resource blocks allocated to the given user equipment.

The document "3rd Generation Partnership Project; Technical Specification Group Radio Access Network; Evolved Universal Terrestrial Access (E-UTRA); Physical layer procedures (Release 8), 01 September 2009" discloses a resource allocation type (named resource allocation type 2) having a resource indication value RIV corresponding to a starting resource block RBstart and a length LCRB in terms of virtually contiguous allocated resource blocks.

The documents "Non-contiguous uplink resource allocation for LTE-A", ASUSTEK, 3GPP draft R1-093881, 12 October 2009" and "Uplink non-contiguous resource allocation for LTE-Advanced, ZTE, 3GPP draft R1-093803, 12 October 2009" both compare scheduling performance and overhead of several methods for allocating resource discontinuously, wherein the start and the end of clusters are indicated and wherein clusters may overlap.

The present invention aims at providing a telecommunication system wherein the sub-carriers allocated to the telecommunication device are not consecutive and wherein the signalling of the allocated sub-carriers is limited.

To that end, the present invention concerns methods for determining information derived from first and second parameters among three parameters which enable a mobile station to identify which resources of a wireless telecommunication network are allocated to the mobile station by a base station, as defined in the appended set of claims.

The present invention concerns also devices for determining information derived from first and second parameters among three parameters which enable a mobile station to identify which resources of a wireless telecommunication network are allocated to the mobile station by a base station, as defined in the appended set of claims.

The characteristics of the invention will emerge more clearly from a reading of the following description of an example embodiment, the said description being produced with reference to the accompanying drawings, among which:

    Fig. 1 represents a wireless cellular telecommunication network in which the present invention is implemented;
    Fig. 2 is a diagram representing the architecture of a base station in which the present invention is implemented ;
    Fig. 3 is a diagram representing the architecture of a mobile station in which the present invention is implemented ;
    Fig. 4 illustrates the architecture of the encoder comprised in a mobile station having one or several transmit antennas according to a particular embodiment of the invention in frequency domain ;
    Fig. 5 illustrates the architecture of the decoder of a base station having one or several receive antennas according to a particular embodiment of the invention ;

Fig. 6a represents an example of two clusters of groups of resource blocks allocated to a mobile station and parameters according to the present invention ;

Fig. 6b represents an example of two clusters of groups of resource blocks allocated to a mobile station and parameters according to the present invention ;

Fig. 7a discloses an example of an algorithm executed by a base station in order to indicate the three parameters which represent the groups of resource blocks allocated to a mobile station when a first criterion is used for selecting a method indicating different values that can take information derived from two parameters which enable the mobile station to identify which groups of resource blocks are allocated to the mobile station;

Fig. 7b discloses an example of an algorithm executed by a base station in order to indicate the three parameters which represent the groups of resource blocks allocated to a mobile station when a second criterion is used for selecting a method indicating different values that can take information derived from two parameters which enable the mobile station to identify which groups of resource blocks are allocated to the mobile station;

Fig. 8 represents a method for signalling two integer positive parameters when the sum between two times the first parameter and the second parameter is bounded, by means of sending one single value chosen so as to reduce the amount of information bits which are necessary to represent the two parameters ;

Fig. 9 represents an improvement of method for arranging the value taken by two parameters when the sum between two times the first parameter and the second parameter is bounded, in order to reduce the amount of information bits which are necessary to represent the two parameters when the bound plus one is odd;

Figs. 10a and 10b represent a first method and a second method indicating different values that can take information derived from two parameters which enable the mobile station to identify which groups of resource blocks are allocated to the mobile station, one method of which being selected according to the first criterion of the present invention ;

Figs. 11a and 11b represent a third method and the second method indicating different values that can take information derived from two parameters which enable the mobile station to identify which groups of resource blocks are allocated to the mobile station, one method of which being selected according to the first criterion of the present invention when the number of groups of physical resource blocks is odd;

Figs. 12a and 12b represent the first method and the second method indicating different values that can take information derived from two parameters which enable the mobile station to identify which groups of resource blocks are allocated to the mobile station, one method of which being selected according to the second criterion of the present invention ;

Figs. 13a and 13b represent the third method and the second method indicating different values that can take information derived from two parameters which enable the mobile station to identify which groups of resource blocks are allocated to the mobile station, one method of which being selected according to the second criterion of the present invention when the number of groups of physical resource blocks is odd;

Fig. 14a discloses an example of an algorithm executed by a mobile station when a method is selected by the base station according to the first criterion of the present invention;

Fig. 14b discloses an example of an algorithm executed by a mobile station when a method is selected by the base station according to the second criterion of the present invention.

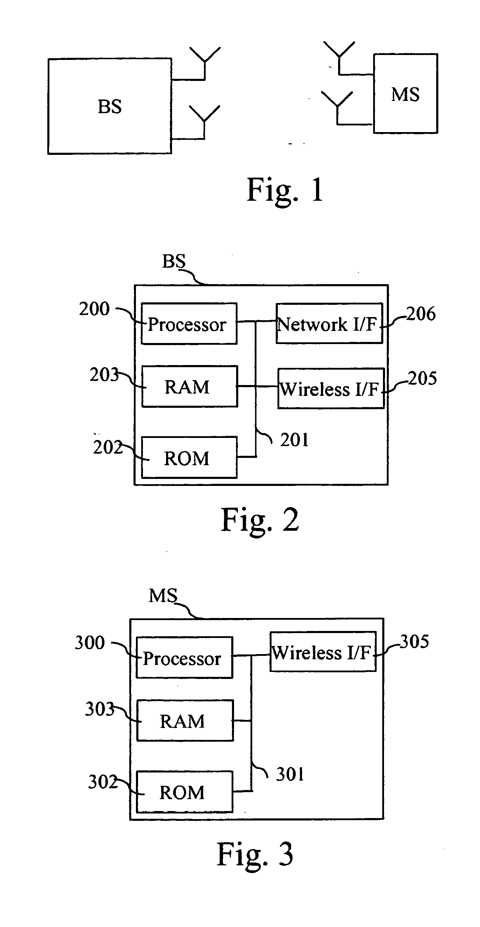

**Fig. 1** represents a wireless cellular telecommunication network in which the present invention is implemented.

The present invention will be described in an example wherein the telecommunication system is a wireless cellular telecommunication system.

The present invention is also applicable to wireless or wired telecommunication systems like Local Area Networks.

In that case, the base station and mobile station are emitters and/or receivers.

In Fig. 1, one base station BS of a wireless cellular telecommunication network and a mobile station MS are shown.

The present invention is described when the resources of the wireless cellular telecommunication network to be used by the mobile station are allocated by a base station.

The resources of the wireless cellular telecommunication network are the frequency spectrum used by the wireless cellular telecommunication network. The frequency spectrum is, for example, decomposed into groups of resource blocks and each resource block comprises a predetermined number of sub-carriers, for example twelve.

It has to be noted here that in a variant a resource block may be composed of a single sub-carrier.

The present invention will be disclosed with groups of resource blocks. The present invention is also applicable when a group of resource blocks is composed of a single resource block or is also applicable in any kind of resource allocation.

The base station BS is a base station of a wireless cellular telecommunication network comprising plural base stations.

Only one mobile station MS is shown for the sake of clarity but the wireless cellular telecommunication network may have a more important number of mobile stations MS to communicate with the base station BS.

The base station BS may be named a node or an access point.

The mobile station MS may be a personal computer, a peripheral device like a set top box, or a phone.

According to the invention, the base station BS:

- compares one of the parameters value to another value,
- selects one method among a first and a second methods indicating different values that can take information derived from the first and second parameters which enable the mobile station to identify which groups of resource blocks are allocated to the mobile station,
- determines the information from the selected method and the first and second parameters,
- transfers the determined information to the mobile station.

According to the invention, the mobile station :

- receives information derived from the first and second parameters,
- receives the third parameter,
- selects one method among a first and a second methods indicating different values that can take information derived from the first and second parameters,
- determines the first and second parameters from the information and the selected method,
- identifies the allocated resources from the first, second and third parameters.

**Fig. 2** is a diagram representing the architecture of a base station in which the present invention is implemented.

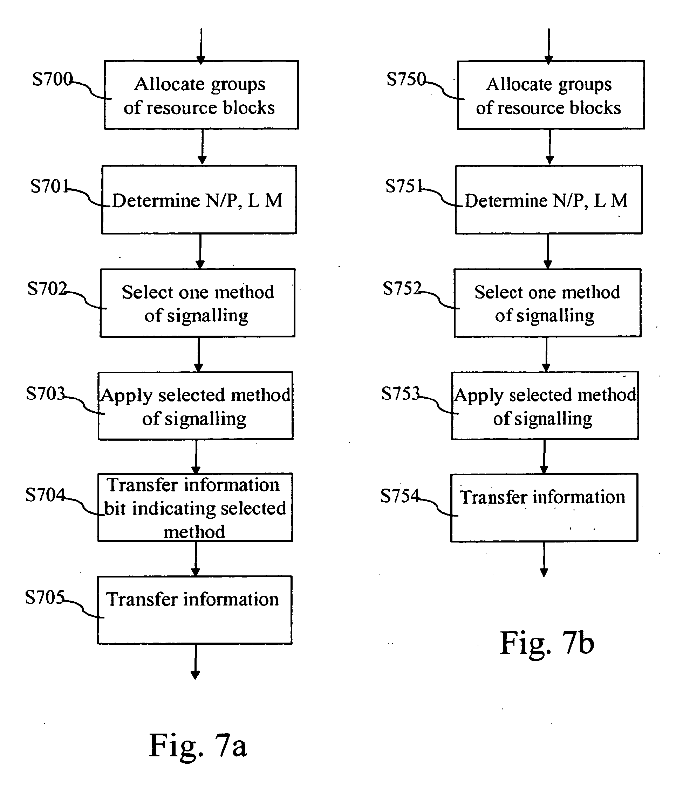

The base station BS has, for example, an architecture based on components connected together by a bus 201 and a processor 200 controlled by the program as disclosed in Fig. 7a or 7b.

It has to be noted here that the base station BS may have an architecture based on dedicated integrated circuits.

The bus 201 links the processor 200 to a read only memory ROM 202, a random access memory RAM 203, a wireless interface 205 and a network interface 206.

The memory 203 contains registers intended to receive variables and the instructions of the program related to the algorithm as disclosed in Fig. 7a or 7b.

The processor 200 controls the operation of the network interface 206 and of the wireless interface 205.

The read only memory 202 contains instructions of the program related to the algorithm as disclosed in Fig 7a or 7b, which are transferred, when the base station BS is powered on, to the random access memory 203.

The base station BS may be connected to a telecommunication network through the network interface 206. For example, the network interface 206 is a DSL (Digital Subscriber Line) modem, or an ISDN (Integrated Services Digital Network) interface, etc.

The wireless interface 205 comprises means for transferring information representative of the sub-carriers allocated to the mobile station MS.

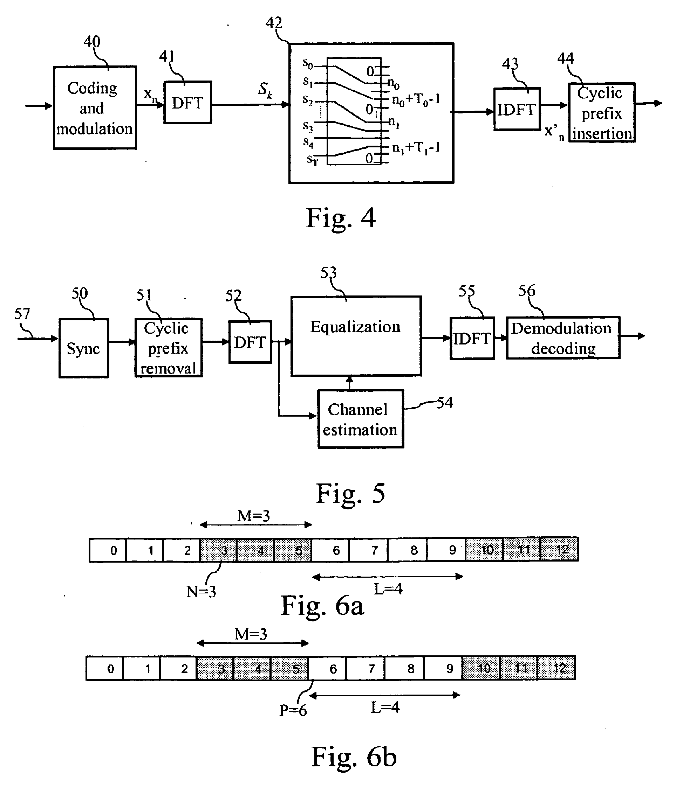

The wireless interface 205 comprises a decoder as disclosed in Fig. 5. The wireless interface 205 may comprise an encoder as disclosed in Fig. 4.

**Fig. 3** is a diagram representing the architecture of a mobile station in which the present invention is implemented.

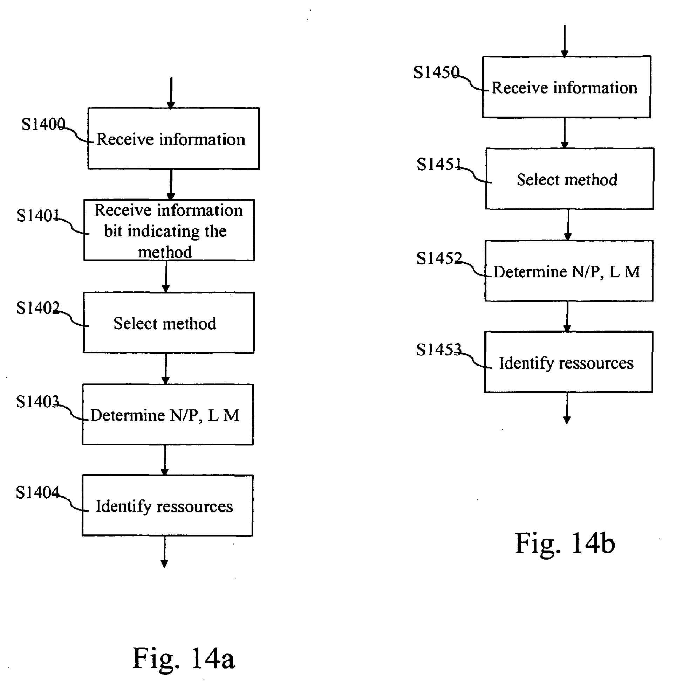

The mobile station MS has, for example, an architecture based on components connected together by a bus 301 and a processor 300 controlled by the program as disclosed in Fig. 14a or 14b.

It has to be noted here that the mobile station MS may have an architecture based on dedicated integrated circuits.

The bus 301 links the processor 300 to a read only memory ROM 302, a random access memory RAM 303 and a wireless interface 305.

The memory 303 contains registers intended to receive variables and the instructions of the program related to the algorithm as disclosed in Fig. 14a or 14b.

The processor 300 controls the operation of the wireless interface 305.

The read only memory 302 contains instructions of the program related to the algorithm as disclosed in Fig. 14a or 14b, which are transferred, when the mobile station MS is powered on, to the random access memory 303.

The wireless interface 305 comprises means for mapping data on sub-carriers comprised in the clusters of sub-carriers allocated to the mobile station MS .

The wireless interface 305 comprises an encoder as disclosed in Fig. 4. The wireless interface 305 may comprise a decoder as disclosed in Fig. 5.

**Fig. 4** illustrates the architecture of the encoder having one or several transmit antennas according to a particular embodiment of the invention in frequency domain.

Data to be transmitted are coded and organized as symbols by the coding and modulation module 40 giving a set of symbols $x_n$. Then the signal is spread in the frequency domain by the DFT (Discrete Fourier Transform) module 41. In a variant, the DFT module is replaced by a Fast Fourier Transform module or any other processing module.

In case of OFDMA, DFT module may not be needed.

The symbols spread in the frequency domain are mapped on sub-carriers comprised in the allocated frequency band by a frequency mapping module 42 which maps data to be transferred on sub-carriers. The frequency mapping module 42 comprises zero insertion and/or frequency shaping capabilities.

The frequency mapping module 42 maps symbols on the frequency band allocated to the mobile station MS. As the sub-carriers are not allocated in a contiguous sub-band, the frequency band is separated into several clusters. The frequency mapping module 42 maps symbols on the different clusters of the frequency band allocated to the mobile station MS.

In Fig. 4, the frequency mapping module 42 shows an example wherein $T=T_0+T_1$ symbols are mapped on $T$ sub-carriers of two clusters. A first cluster comprises the sub-carriers noted $n_0$ to $n_0+T_0$-1 and a second cluster comprises the sub-carriers noted $n_1$ to $n_1+T_1$-1.

The symbols outputted by the frequency mapping module 42 are transformed back in the time domain by the IDFT (Inverse Discrete Fourier Transform) module 43.

An optional cyclic prefix insertion module 44 can be applied before transmission through the antenna of the mobile station MS.

**Fig. 5** illustrates the architecture of the decoder of a device according to a particular embodiment of the invention.

At least one signal 57 is received from the receive antenna. The synchronization module 50 synchronizes the received signal 57.

The optional cyclic prefix removal module 51 removes the cyclic prefix if used, to the synchronized signal.

The DFT module 52 executes a DFT on the synchronized signal on which the cyclic prefix has been removed or not. In a variant, the DFT module is replaced by a Fast Fourier Transform module or any other processing module.

A channel estimation module 54 will work on the signals provided by the DFT module 52. The output of the channel estimation module 54 commands an equalization module 53. The output of the equalization module 53 is processed by an inverse DFT module 55 before a classical channel decoding module 56 which treats the resulting signal.

In case of OFDMA, IDFT module 55 may not be needed. In other variants, it may be replaced with other processing modules.

The demodulation and decoding module 56 demodulates and decodes the symbols in and outputs data.

**Fig. 6a** represents an example of two clusters of groups of resource blocks allocated to a mobile station and parameters according to the present invention.

According to the invention, clusters of groups of resource blocks allocated to a mobile station are not consecutive.

In the example of Fig. 6a, two clusters of groups of resource blocks are allocated to one mobile station MS.

The Fig. 6a discloses thirteen groups of resource blocks noted 0 to 12.

In order to limit both the Peak to Average Power Ratio PAPR increase and the signalling overhead, the allocation of two clusters of equal size is assumed.

The present invention intends to define information representing three parameters which enable a receiver like a mobile station to identify which groups of resource blocks are allocated to the mobile station, for example for uplink transmission.

The three parameters are the identifier N of the first cluster of groups of resource blocks allocated to the mobile station MS, the number M of groups of resource blocks comprised in each cluster of groups of resource blocks allocated to the mobile station and the number L of groups of resource blocks separating the two clusters of groups of resource blocks allocated to the mobile station . According to the example of Fig. 6a, N is equal to three, M is equal to three and L is equal to four.

**Fig. 6b** represents an example of two clusters of groups of resource blocks allocated to a mobile station and parameters according to the present invention.

According to the invention, clusters of groups of resource blocks allocated to a mobile station are not consecutive.

In the example of Fig. 6b, the same clusters of groups of resource blocks are allocated to one mobile station MS as the ones of Fig. 6a.

The present invention intends to define information representing three parameters which enable a receiver like a mobile station to identify which groups of resource blocks are allocated to the mobile station, for example for uplink transmission.

The three parameters are the identifier **P** that indentifies the first group of resource blocks separating the two clusters of groups of resource blocks allocated to the mobile station, the number M of groups of resource blocks comprised in each cluster of groups of resource blocks allocated to the mobile station and the number L of groups of resource blocks separating the two clusters of groups of resource blocks allocated to the mobile station. According to the example of Fig. 6b, P is equal to six, M is equal to three and L is equal to four.

**Fig. 7a** discloses an example of an algorithm executed by a base station in order to indicate the three parameters which represent the groups of resource blocks allocated to a mobile station when a first criterion is used for selecting a method indicating different values that can take information derived from two parameters which enable the mobile station to identify which groups of resource blocks are allocated to the mobile station.

For example, the present algorithm will be described when it is executed by the processor 200 of the base station BS.

The present algorithm is executed each time clusters of sub-carriers are allocated to a mobile station MS handled by the base station BS.

At step S700, the processor 200 allocates groups of resource blocks to the mobile station MS. The allocated groups of resource blocks are allocated for example according to channel conditions and/or according to required quality of service. The allocated groups of resource blocks are divided into two clusters comprising the same number of groups of resource blocks.

At next step S701, the processor 200 determines the three parameters that enable the mobile station MS to identify which groups of resource blocks are allocated to the mobile station MS.

At next step S702, the processor 200 selects one method for determining information representing three parameters M, N and L or L, P and M among at least a first and a second methods.

According to a first mode of realization of the present invention, the processor 200 selects the method according to a first criterion which takes into account the value of at least two parameters.

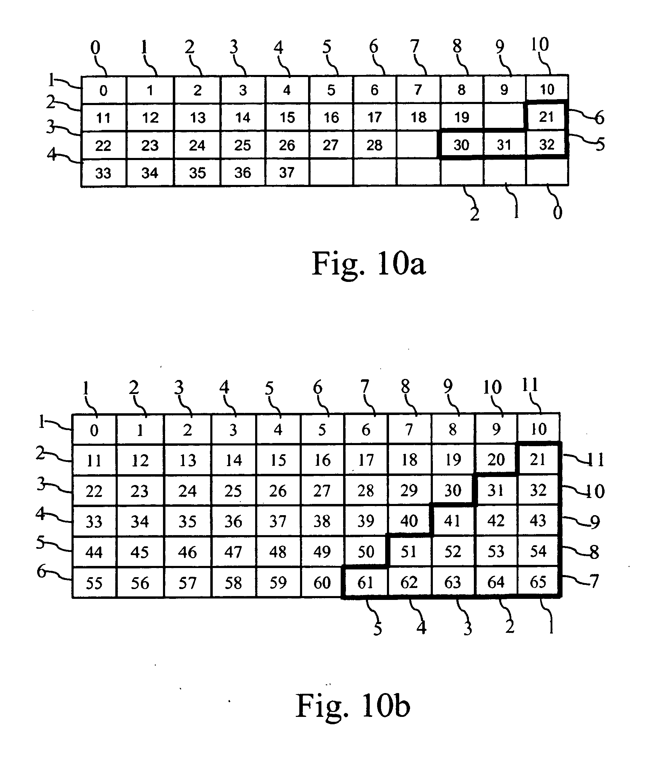

For example, the processor 200 selects the first method as it will be disclosed in reference to Fig. 10a if $L \leq M$ and selects the second method as it will be disclosed in reference to Fig. 10b otherwise.

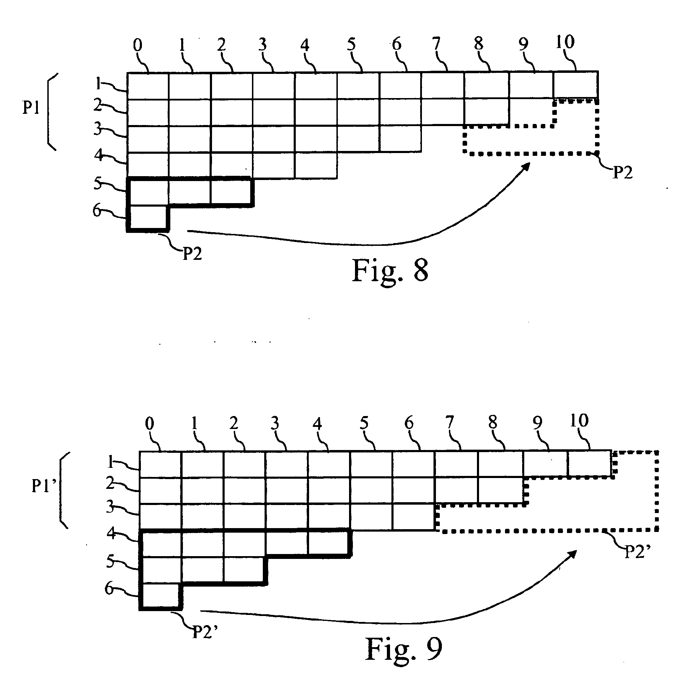

**Fig. 8** represents a method for signalling two integer positive parameters when the sum between two times the first parameter and the second parameter is bounded, by means of sending one single value chosen so as to reduce the amount of information bits which are necessary to represent the two parameters.

Fig. 8 discloses an example in which the frequency resources are divided into $N_{RBG}$ groups of resource blocks, wherein $N_{RBG}$ is equal to thirteen groups of resource blocks.

In Fig. 8, columns represent the different values taken by the identifier N of the first group of resource blocks allocated to the mobile station MS and rows represent the number M of groups of resource blocks comprised in each cluster of groups of resource blocks allocated to the mobile station.

The identifier N of the first group of resource blocks varies from 0 to at most $N_{RBG}$ minus three, i.e. ten as M and L are equal at least to one.

If M is equal to one, N varies from null to ten.

If M is equal to two, N varies from null to eight.

If M is equal to three, N varies from null to six.

If M is equal to four, N varies from null to four.

If M is equal to five, N varies from null to two.

If M is equal to six, N is null.

As it can be seen in Fig. 8, N and M do not take any possible values. If we intend to represent N and M with respective information bits, we need four bits to represent N and three bits to represent M.

In order to reduce the number of information bits, the rows of M=5 and 6 of the area P2 and shifted to the rows of M=2 and 3 of the area P1.

As a result, we obtain the arrangement as disclosed in Fig. 10a.

**Fig. 10a** represents the first method indicating different values that can take information derived from two parameters which enable the mobile station to identify which groups of resource blocks are allocated to the mobile station.

In the first method, the first parameter is M, the second parameter is N and the third parameter is L.

The numbers on the lower side of Fig. 10a represent the different values that can take the second parameter N in the area having a bold border.

The numbers on the right side of Fig. 10a represent the different values that can take the first parameter M in the area having a bold border.

The numbers on the top side of Fig. 10a represent the different values that can take the second parameter N in the remaining part of the Fig. 10a.

The numbers on the left side of Fig. 10a represent the different values that can take the first parameter M in the remaining part of the Fig. 10a.

An information derived from a first and a second parameters is given for each couple (M,N). The information derived from a first and a second parameters representing the couple (M,N) is noted in the cell corresponding to the intersection of the row and column of the couple (M,N).

A cell corresponding to the intersection of the row and column of a couple (M,N) is not comprised in the area

having a bold border if $M \leq M_{TH} = floor\left(\dfrac{M_{\max}}{2}\right) + 1$, where floor(x) is the integer part of x, and $M_{max}$ is the maximum value that M can take, $M_{max}$ floor(($N_{RBG}$-1)/2).

If the cell corresponding to the intersection of the row and column of a couple (M,N) is not comprised in the area having a bold border, the information derived from a first and a second parameters $RIV_1$ is calculated according to the following formula:

$$RIV_1 = (N_{RBG} - 2)(M - 1) + N \ .$$

If the cell corresponding to the intersection of the row and column of a couple (M,N) is comprised in the area having a bold border, the information derived from a first and a second parameters $RIV_1$ is calculated according to the following formula:

$$RIV_1 = (N_{RBG} - 2)(M_{\max} - M + 1) + N_{RBG} - 3 - N \ .$$

The cells comprising no information derived from a first and a second parameters are cells for which couples (M,N) are not possible.

The information derived from a first and a second parameters $RIV_1$ takes thirty eight different values, it can then be represented by six bits.

It has to be noted here that the binary value of the third parameter L is transferred in parallel. According to the invention, this method is used when $L \leq M \leq M_{\max}$. According to the example of Fig. 10a, $M_{max}$ is equal to six and thus three bits are necessary to signal the possible values of L.

**Fig. 10b** represents the second method indicating different values that can take information derived from two parameters which enable the mobile station to identify which groups of resource blocks are allocated to the mobile station.

The Fig. 10b discloses an example in which the frequency resources are divided into $N_{RBG}$ groups of resource blocks, wherein $N_{RBG}$ is equal to thirteen groups of resource blocks.

In Fig. 10b, columns represent the different values taken by the identifier P of the first group of resource blocks which is between two clusters allocated to the mobile station MS and rows represent the number L of groups of resource blocks comprised between two clusters of groups of resource blocks allocated to the mobile station.

In the second method, the first parameter is equal to L, the second parameter is equal to P and the third parameter is equal to M.

The identifier P varies from 1 to at most $N_{RBG}$ minus two and L varies from one to ten.

The numbers on the lower side of Fig. 10b represent the different values that can take the second parameter P in the area having a bold border.

The numbers on the right side of Fig. 10b represent the different values that can take the first parameter L in the area having a bold border.

The numbers on the top side of Fig. 10b represent the different values that can take the second parameter P in the remaining part of the Fig. 10b.

The numbers on the left side of Fig. 10b represent the different values that can take the first parameter L in the remaining part of the Fig. 10b.

An information derived from a first and a second parameters is given for each couple (L,P). The information derived from a first and a second parameters representing the couple (L,P) is noted in the cell corresponding to the intersection of the row and column of the couple (L,P).

A cell corresponding to the intersection of the row and column of a couple (L,P) is not comprised in the area having a bold border if $L \leq N_{RBG} / 2$.

If the cell corresponding to the intersection of the row and column of a couple (L,P) is not comprised in the area having a bold border, the information derived from a first and a second parameters $RIV_2$ is calculated according to the following formula:

$$RIV_2 = (N_{RBG} - 2)(L - 1) + P - 1 \ .$$

If the cell corresponding to the intersection of the row and column of a couple (L,P) is comprised in the area

having a bold border, the information derived from a first and a second parameters $RIV_2$ is calculated according to the following formula:

$$RIV_2 = (N_{RBG} - 2)(N_{RBG} - L - 1) + N_{RBG} - 2 - P .$$

The information derived from a first and a second parameters $RIV_2$ takes sixty six different values, it can then be represented by seven bits.

The binary value of the third parameter M value is transferred in parallel. M takes six values represented by three bits.

The smallest value between M and L is transferred in parallel. Since 2M+L is always lower than $N_{RBG}$, min (M, L)$\leq$floor($N_{RGB}$/3), ceil(log2(floor($N_{RBG}$/3))) bits are needed for the value transferred in parallel. One extra bit is necessary to indicate which one of the methods is to be used.

It has to the noted here that the second method is selected when $1 \leq M < L$, thus only for $L \geq 2$. The first row of the Fig. 10b can be then eliminated. According to that particular mode of realization, if the cell corresponding to the intersection of the row and column of a couple (L,P) is not comprised in the area having a bold border, the new information derived from a first and a second parameters $RIV_{2bis}$ is calculated according to the following formula:

$$RIV_{2bis} = (N_{RBG} - 2)(L - 2) + P - 1 .$$

If the cell corresponding to the intersection of the row and column of a couple (L,P) is comprised in the area having a bold border, the information derived from a first and a second parameters $RIV_{2bis}$ is calculated according to the following formula:

$$RIV_{2bis} = (N_{RBG} - 2)(N_{RBG} - L - 2) + N_{RBG} - 2 - P .$$

The information derived from a first and a second parameters $RIV_{2bis}$ takes fifty six different values, it can then be represented by six bits.

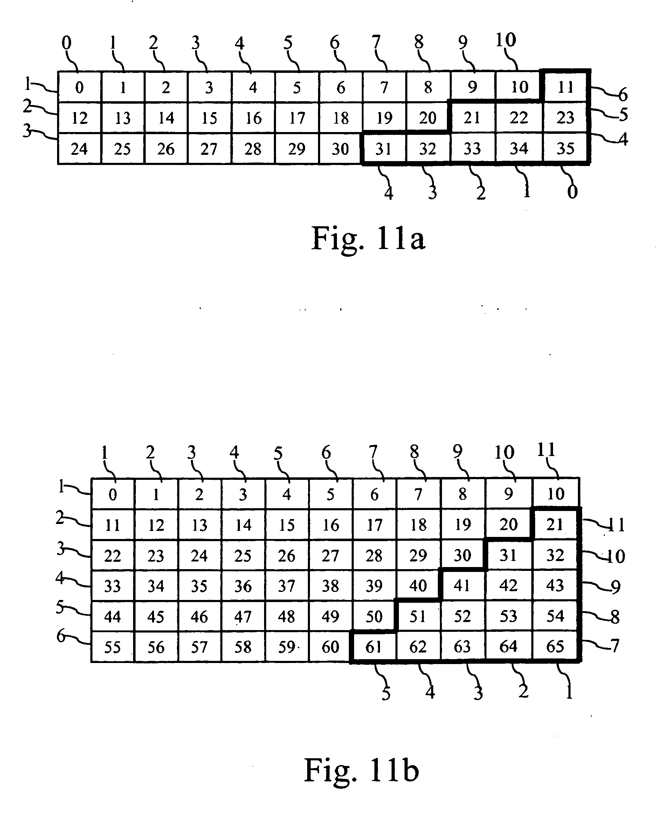

According to another example, if the number of groups of blocks of resource elements is odd, the processor 200 selects the third method as disclosed in reference to Fig. 11a if $L \leq M$ and selects the second method as disclosed in reference to Fig. 11b otherwise.

**Fig. 9** represents an improvement of method for arranging the value taken by two parameters when the sum between two times the first parameter and the second parameter is bounded, in order to reduce the amount of information bits which are necessary to represent the two parameters when the bound plus one is odd.

Fig. 9 discloses an example in which the frequency resources are divided into $N_{RBG}$ groups of resource blocks, wherein $N_{RBG}$ is equal to thirteen groups of resource blocks.

In Fig. 9, columns represent the different values taken by the identifier N of the first group of resource blocks allocated to the mobile station MS and rows represent the number M of groups of resource blocks comprised in each cluster of groups of resource blocks allocated to the mobile station.

The identifier N of the first group of resource blocks varies from 0 to at most $N_{RBG}$ minus three, i.e. ten as M and L are equal at least to one.

If M is equal to one, N varies from null to ten.

If M is equal to two, N varies from null to eight.

If M is equal to three, N varies from null to six.

If M is equal to four, N varies from null to four.

If M is equal to five, N varies from null to two.

If M is equal to six, N is null.

As it can be seen in Fig. 9, N and M do not take any possible values. If we intend to represent N and M with respective information bits, we need four bits to represent N and three bits to represent M.

In order to reduce the number of information bits, the rows of M=4 to 6 of the area P2' are shifted to the rows of M=1 to 3 of the area P1'.

As a result, we obtain the arrangement as disclosed in Fig. 11 a.

**Fig. 11a** represents the third method indicating different values that can take information derived from two parameters which enable the mobile station to identify which groups of resource blocks are allocated to the mobile station when the number of groups of physical resource blocks is odd.

The numbers on the lower side of Fig. 11a represent the different values that can take the second parameter N in the area having a bold border.

The numbers on the right side of Fig. 11a represent the different values that can take the first parameter M in the area having a bold border.

The numbers on the top side of Fig. 11a represent the different values that can take the second parameter N in the remaining part of the Fig. 11a.

The numbers on the left side of Fig. 11a represent the different values that can take the first parameter M in the remaining part of the Fig. 11a.

An information derived from a first and a second parameters is given for each couple (M,N). The information derived from a first and a second parameters representing the couple (M,N) is noted in the cell corresponding to the intersection of the row and column of the couple (M,N).

A cell corresponding to the intersection of the row and column of a couple (M,N) is not comprised in the area having a bold border if $M \leq M'_{TH} = ceil\left(\dfrac{\overline{M_{max}}}{2}\right)$, where ceil(x) is the smallest integer strictly superior to x, and $M_{max}$ is the maximum value that M can take, $M_{max}$=floor(($N_{RBG}$-1)/2) where floor(x) is the integer part of (x).

If the cell corresponding to the intersection of the row and column of a couple (M,N) is not comprised in the area having a bold border, the information derived from a first and a second parameters $RIV_3$ is calculated according to the following formula:

$$RIV_3 = (N_{RBG} - 1)(M - 1) + N \ .$$

If the cell corresponding to the intersection of the row and column of a couple (M,N) is comprised in the area having a bold border, the information derived from a first and a second parameters $RIV_3$ is calculated according to the following formula:

$$RIV_3 = (N_{RBG} - 1)(M_{max} - M) + N_{RBG} - 2 - N \ .$$

The information derived from a first and a second parameters $RIV_3$ takes thirty six different values, it can then be represented by six bits.

**Fig. 11b** represents the second method indicating different values that can take information derived from two parameters which enable the mobile station to identify which groups of resource blocks are allocated to the mobile station.

Fig. 11b is identical to the Fig. 10b it will not be described anymore.

It has to the noted here that, as already disclosed, the second method is selected when $1 \leq M < L$, thus only for $L \geq 2$. The first row of the Fig. 11b can be then eliminated.

According to that particular mode of realization, if the cell corresponding to the intersection of the row and column of a couple (L,P) is not comprised in the area having a bold border, the new information derived from a first and a second parameters $RIV_{2bis}$ is calculated as already disclosed.

It has to be noted that in above mentioned examples, the binary value of the parameter L value is transferred in parallel if the first or the third method is selected, and the binary value of the M parameter is transferred in parallel if the second method is selected. Thus, the smallest value between M and L is transferred in parallel. Since 2M+L is always lower than $N_{RBG}$, min (M,L)$\leq$ floor ($N_{RBG} / 3$) the number of bits necessary for the value transferred in parallel is reduced to ceil(log2(floor($N_{RBG}$/3))) bits. One extra bit is necessary to indicate which one of the methods is to be used.

At next step S703, the processor 200 applies the selected method.

At next step S704, the processor 200 commands the transfer of an information bit which indicates which method among the first and second methods or which method among the third and second methods have been selected.

At next step S705, the processor 200 commands the transfer of information representative of the three parameters to the mobile station, i.e. the determined information derived from a first and a second parameters and the smallest value between M and L, and the information bit which indicates the method that has been used.

**Fig. 7b** discloses an example of an algorithm executed by a base station in order to indicate the three parameters which represent the groups of resource blocks allocated to a mobile station when a second criterion is used for selecting a method indicating different values that can take information derived from two parameters which enable the mobile station to identify which groups of resource blocks are allocated to the mobile station.

For example, the present algorithm will be described when it is executed by the processor 200 of the base station BS.

The present algorithm is executed each time clusters of sub-carriers are allocated to a mobile station MS handled by the base station BS.

At step S750, the processor 200 allocates groups of resource blocks to the mobile station MS. The allocated groups of resource blocks are allocated for example according to channel conditions and/or according to required quality of service. The allocated groups of resource blocks are divided into two clusters comprising the same number of groups of resource blocks.

At next step S751, the processor 200 determines the three parameters that enable the mobile station to identify which groups of resource blocks are allocated to the mobile station.

At next step S752, the processor 200 selects one method for determining information representing three parameters: N or P, M and L among at least a first and a second methods.

According to a second mode of realization of the present invention, the processor 200 selects the method according to a second criterion which takes into account the value of one parameter.

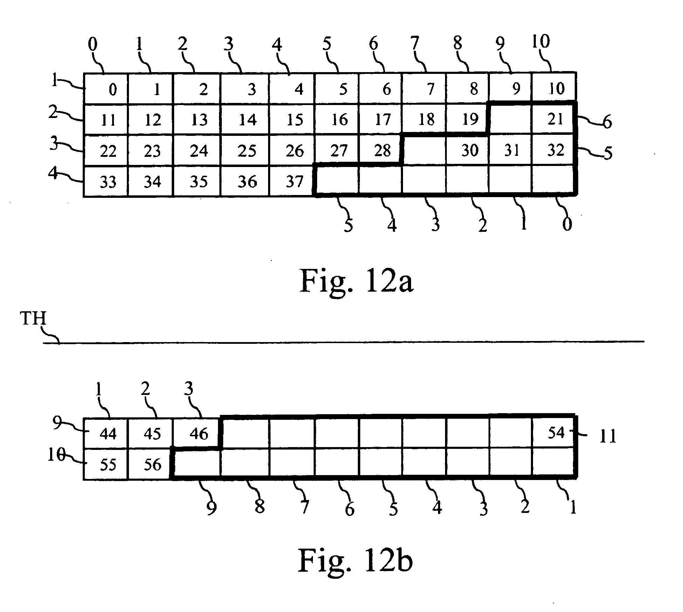

For example, the processor 200 selects the first method as disclosed in reference to Fig. 12a if $L \leq TH$, TH being a threshold value and selects the second method as disclosed in reference to Fig. 12b otherwise.

**Fig. 12a** represents the first method indicating different values that can take information derived from two parameters which enable the mobile station to identify which groups of resource blocks are allocated to the mobile station in an example wherein TH is equal to eight.

Fig. 12a represents the information derived from two parameters which enable the mobile station to identify which groups of resource blocks are allocated to the mobile station if $L \leq TH.$

The Fig. 12a is identical to the Fig. 10a, it will not be described anymore.

If the cell corresponding to the intersection of the row and column of a couple (M,N) is not comprised in the area having a bold border, the information derived from a first and a second parameters $RIV_4$ which is identical to the information derived from a first and a second parameters $RIV_1$ is calculated according to the following formula:

$$RIV_4 = (N_{RBG} - 2)(M - 1) + N \ .$$

If the cell corresponding to the intersection of the row and column of a couple (M,N) is comprised in the area having a bold border, the information derived from a first and a second parameters $RIV_4$ is calculated according to the following formula:

$$RIV_4 = (N_{RBG} - 2)(M_{\max} - M + 1) + N_{RBG} - 3 - N \ .$$

The cells comprising no information derived from a first and a second parameters are cells for which couples (M,N) are not possible.

The information derived from a first and a second parameters $RIV_4$ values up to thirty seven, it can then be represented by six bits.

If the method disclosed in Fig. 12a is selected, the third parameter L is transferred in parallel.

**Fig. 12b** represents the second method indicating different values that can take information derived from two parameters which enable the mobile station to identify which groups of resource blocks are allocated to the mobile station in an example wherein TH is equal to eight.

The identifier P varies from 1 to at most $N_{RBG}$ minus two and L varies from TH+1 to $N_{RBG}$-2.

The numbers on the lower side of Fig. 12b represent the different values that can take the second parameter P in the area having a bold border.

The numbers on the right side of Fig. 12b represent the different values that can take the first parameter L in the area having a bold border.

The numbers on the top side of Fig. 12b represent the different values that can take the second parameter P in the remaining part of the Fig. 12b.

The numbers on the left side of Fig. 12b represent the different values that can take the first parameter L in the remaining part of the Fig. 12b.

An information derived from a first and a second parameters is given for each couple (L,P). The information derived from a first and a second parameters representing the couple (L,P) is noted in the cell corresponding to the intersection of the row and column of the couple (L,P).

A cell corresponding to the intersection of the row and column of a couple (L,P) **is not comprised in the area** having a bold border if

$$L \le L_{TH} = ceil\left(\frac{N_{RBG} - 2 - TH}{2}\right) + TH .$$

If the cell corresponding to the intersection of the row and column of a couple (L,P) is not comprised in the area having a bold border, the information derived from a first and a second parameters RIV$_5$ is calculated according to the following formula:

$$RIV_5 = (N_{RBG} - 2)(L - TH + M_{TH} - 1) + P - 1,$$

where

$$M_{TH} = floor\left(\frac{M_{max}}{2}\right) + 1$$

If the cell corresponding to the intersection of the row and column of a couple (L,P) is comprised in the area having a bold border, the information derived from a first and a second parameters RIV$_5$ is calculated according to the following formula:

$$RIV_5 = (N_{RBG} - 2)(N_{RBG} - 2 - L + M_{TH}) + N_{RBG} - 2 - P .$$

The cells having no information derived from a first and a second parameters corresponds to values that the couple (L,P) cannot take.

If the method disclosed in Fig. 12b is selected, the third parameter M is transferred in parallel.

At most six bits are thus necessary to signal the values of information derived from a first and a second parameters positive and inferior to fifty six. Overall, nine bits are necessary. High TH values may reduce the number of bits representative of the RIV$_5$ but would increase the number of bits representative of L when $L \le L_{TH}$. Several optimum values for TH can be found. The optimum set of TH values can be defined as that set of values that minimizes:

$$ceil\left(\log_2\left(RIV_5\_\max\right)\right) + ceil\left(\log_2\left(TH\right)\right),$$

where:

$$RIV_5\_\max = M_{TH}\left(N_{RBG} - 2\right) + L_{TH}(N_{RBG} - 2)$$

TH can be equal to two, three, four, seven or eight, all these values leading to nine bits of signalling overhead.

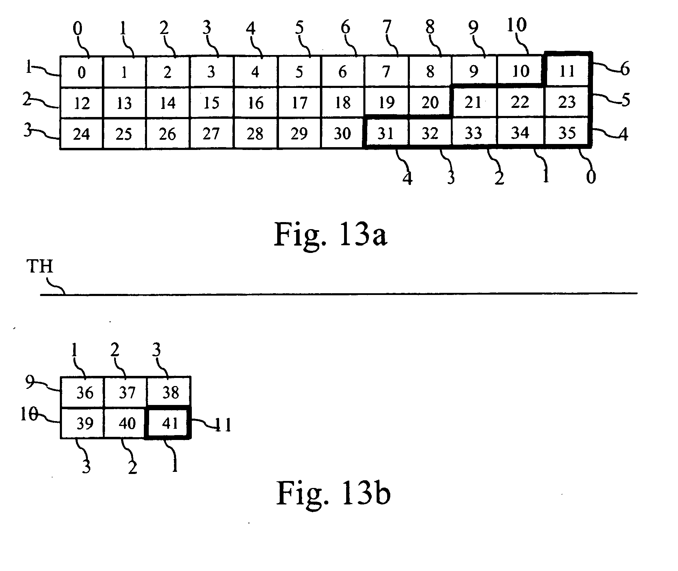

In another example, if N$_{RBG}$ is odd, the processor 200 selects the third method as disclosed in reference to Fig. 13a if $L \le TH$ and selects the second method as disclosed in reference to Fig. 13b otherwise.

**Figs. 13a and 13b** represent the third method and the second method indicating different values that can take information derived from two parameters which enable the mobile station to identify which groups of resource blocks are allocated to the mobile station, one method of which being selected according to the second criterion of the present invention when the number of groups of physical resource blocks is odd;

The Figs. 13 disclose an example in which the frequency resources are divided into N$_{RBG}$ groups of resource blocks, wherein N$_{RBG}$ is equal to thirteen groups of resource blocks and wherein the threshold value is equal to eight.

The Fig. 13a represents the information derived from two parameters which enable the mobile station to identify which groups of resource blocks are allocated to the mobile station if $L \le TH$.

The Fig. 13a is identical to the Fig. 11a, it will not be described anymore.

If the cell corresponding to the intersection of the row and column of a couple (M,N) is not comprised in the area having a bold border, the information derived from a first and a second parameters RIV$_6$ which is identical to the information derived from a first and a second parameters RIV$_3$ is calculated according to the following formula:

$$RIV_6 = (N_{RBG} - 1)(M - 1) + N ,$$

If the cell corresponding to the intersection of the row and column of a couple (L,P) is comprised in the area having a bold border, the information derived from a first and a second parameters $RIV_6$ is calculated according to the following formula:

$$RIV_6 = (N_{RBG} - 1)(M_{max} - M) + N_{RBG} - 2 - N .$$

If the method disclosed in Fig. 13a is selected, the parameter L is transferred in parallel.

The Fig. 13b represents the information derived from two parameters which enable the mobile station to identify which groups of resource blocks are allocated to the mobile station if $L > TH$.

The identifier P of the first group of resource blocks varies from 1 to at most $N_{RBG}$ minus two and L varies from TH+1 to $N_{RBG}$-2.

The numbers on the lower side of Fig. 13b represent the different values that can take the parameter P in the area having a bold border.

The numbers on the right side of Fig. 13b represent the different values that can take the parameter L in the area having a bold border.

The numbers on the top side of Fig. 13b represent the different values that can take the parameter P in the remaining part of the Fig. 13b.

The numbers on the left side of Fig. 13b represent the different values that can take the parameter L in the remaining part of the Fig. 13b.

An information derived from a first and a second parameters in given for each couple (L,P). The information derived from a first and a second parameters representing the couple (L,P) is noted in the cell corresponding to the intersection of the row and column of the couple (L,P).

A cell corresponding to the intersection of the row and column of a couple (L,P) is not comprised in the area a having a bold border if $L \leq L_{TH} = ceil\left(\dfrac{N_{RBG} - 2 - TH}{2}\right) + TH$,

If the cell corresponding to the intersection of the row and column of a couple (L,P) is not comprised in the area having a bold border, the information derived from a first and a second parameters $RIV_7$ is calculated according to the following formula:

$$RIV_7 = RIV_{6\_max} + (N_{RBG} - 2 - TH)(L - TH - 1) + P .$$

If the cell corresponding to the intersection of the row and column of a couple (L,P) is comprised in the area having a bold border, the information derived from a first and a second parameters $RIV_7$ is calculated according to the following formula:

$$RIV_7 = RIV_{6\_max}(N_{RBG} - 2 - TH)(N_{RBG} - 1 - L) + N_{RBG} - TH - P .$$

If the method disclosed in Fig. 13b is selected, the parameter M is transferred in parallel.

The optimum set of TH values can be defined as that set of values that minimizes:

$$ceil\left(\log_2\left(RIV_6\_max + \frac{(N_{RBG} - 2 - TH)(N_{RBG} - 1 - TH)}{2}\right)\right) + ceil\left(\log_2\left(TH\right)\right)$$

$RIV_{6\_max}$ is the total number of possible pairs (M,N), which is:

$$RIV_{6\_max} = \sum_{i=1}^{M_{max}} (N_{RBG} - 2i) - 1 = M_{max} N_{RBG} - M_{max}(M_{max} + 1) - 1$$

$$= M_{max}(N_{RBG} - M_{max} - 1) - 1$$

It has to be noted here that the information derived from two parameters as disclosed in reference to Fig. 13b may be used in combination with the information derived from two parameters as disclosed in reference to Fig. 12a.
At next step S753, the processor 200 applies the selected method.
At next step S754, the processor 200 commands the transfer of information representative of the three parameters to the mobile station.
It has to be noted here that as the information derived from a first and a second parameters values for the first or third method are different from the information derived from a first and a second parameters for the second method, it is not necessary to inform the mobile station which method is selected.
**Fig. 14a** discloses an example of an algorithm executed by a mobile station when a method is selected by the base station according to the first criterion of the present invention ;
More precisely, the present algorithm is executed by the processor 300 of the mobile station MS.
At step S1400, the mobile station MS receives information representative of the three parameters.
At step S1401, the mobile station MS receives an information bit which indicates which method has been selected by the base station.
At next step S1402, the mobile station MS selects the method which corresponds to the received information bit.
At next step S1403, the mobile station MS retrieves the three parameters from the information representative of the three parameters and the information bit.
If the information bit shows that the information derived from a first and a second parameters has been calculated according to the first method, the processor 300 determines the parameters M and N based on the received information derived from a first and a second parameters. The value transferred separately corresponds to L.
If the information bit shows that the information derived from a first and a second parameters has been calculated according to the second method, the processor 300 determines the parameters L and P based on the received information derived from a first and a second parameters. The value transferred separately corresponds to M.
If the information derived from a first and a second parameters was calculated with the formula $RIV_1$, the processor 300 determines the parameters M and N by calculating the quotient $Q = floor\ (RIV\ /\ (N_{RBG} - 2))$, and the remainder $R = RIV_1 \bmod (N_{RBG} - 2)$ of the division operation $RIV/\ (N_{RBG} - 2)$, where Amod(B) denotes the A modulo B function.
If $2Q + R \le N_{RBG} - 2$, $M = Q + 1$ and N=R.
If $2Q + R > N_{RBG} - 2$, $M = M_{max} + 1 - Q$ and $N = N_{RBG} - 3 - R$.
The value transferred separately corresponds to L.
If the information derived from a first and a second parameters has been calculated according to the formula $RIV_2$, the processor 300 determines the parameters L and P by calculating the quotient $Q = floor(RIV_2\ /\ (N_{RBG} - 2))$ and the remainder $R = RIV_2 \bmod(N_{RBG} - 2)$ of the division operation $RIV_2\ /\ (N_{RBG} - 2)$.
If $Q + R < N_{RBG} - 3$, $L = Q + 1$ and P=R+1.
If $Q + R > N_{RBG} - 3$, $L = N_{RBG} - 1 - Q$ and $P = N_{RBG} - 2 - R$.
The value transferred separately corresponds to M.
If the information derived from a first and a second parameters has been calculated according to the formula $RIV_3$, the processor 300 determines the parameters M and N by calculating the quotient $Q = floor(RIV_3\ /\ (N_{RBG} - 1))$ and the remainder $R = RIV_3 \bmod(N_{RBG} - 1)$ of the division operation $RIV_3/\ (N_{RBG} - 1)$, where mod(x) denotes the modulo of x.
If $2Q + R \le N_{RBG} - 3$, $M = Q + 1$ and N=R.
If $2Q + R > N_{RBG} - 3$, $M = M_{max} - Q$ and $N = N_{RBG} - 2 - R$.
The value transferred separately corresponds to L.
At next step S1404, the mobile station MS identifies the groups of resource blocks which correspond to the three parameters.
**Fig. 14b** discloses an example of an algorithm executed by a mobile station when a method is selected by the base station according to the second criterion of the present invention.
More precisely, the present algorithm is executed by the processor 300 of the mobile station MS.
At step S1450, the mobile station MS receives information representative of the three parameters.
At next step S1451, the mobile station MS selects the method for retrieving the three parameters which corresponds to the value of the information derived from a first and a second parameters.
As shown in Figs. 12 and 13, each information derived from a first and a second parameters value corresponds univocally to one method.

The threshold value of the information derived from a first and a second parameters may be stored in the RAM memory 303 of the mobile station MS. In a variant, the mobile station MS calculates the threshold value.

At next step S 1452, the mobile station MS retrieves the three parameters from the information derived from a first and a second parameters and from the third parameter transferred in parallel.

If the information derived from a first and a second parameters has been calculated according to the formula $RIV_4$, the processor 300 determines the parameters M and N by calculating the quotient Q = *floor(RIV$_4$ / (N$_{RBG}$ — 2))* and the remainder R = $RIV_4$ mod($N_{RBG}$ -2) of the division operation *RIV / (N - 2)*, where mod(x) denotes the modulo of x. 4 *RBG*

$$\text{If } 2Q + R \le N_{RBG} - 2,\ M = Q + 1 \text{ and N=R.}$$

$$\text{If } 2Q + R > N_{RBG} - 2,\ M=M_{max} +1-Q \text{ and N=N}_{RBG}\text{-3-R.}$$

L is identified as the third parameter transferred separately.

If the information derived from a first and a second parameters has been calculated according to the formula $RIV_5$, the processor 300 determines the parameters L and P by calculating the quotient Q = *floor (RIV$_5$ / (N$_{RBG}$ — 2))* and the remainder R = $RIV_5$ mod($N_{RBG}$ — 2) of the division operation *RIV / (N - 2)* .

$$\text{If } Q + R \le N_{RBG} - 3 - TH + M_{TH}^{5\ RBG},\ L = Q + TH - M_{TH}^{5\ RBG} + 1 \text{ and P=R+1.}$$

$$\text{If } Q + R > N_{RBG} - 3 - TH + M_{TH},\ L=N_{RBG}.2+MTH-Q \text{ and P=N}_{RBG}\text{-2-R.}$$

M is identified as the third parameter transferred separately.

If the information derived from a first and a second parameters has been calculated according to the formula $RIV_6$, the processor 300 determines the parameters M and N by calculating the quotient *Q = floor(RIV / (N -1))* and 6 *RBG* the remainder *R = RIV$_6$* mod($N_{RBG}$ -1) of the division operation *RIV / (N$_{RBG}$ -1)* , where mod(x) denotes the modulo of x. 6

$$\text{If } 2Q + 1 \le N_{RBG} - 3,\ M = Q + 1 \text{ and N=R.}$$

$$\text{If } 2Q + 1 > N_{RBG} - 3,\ M=M_{max} -Q \text{ and N=N}_{RBG}\text{-2-R.}$$

L is identified as the third parameter transferred separately.

If the information derived from a first and a second parameters has been calculated according to the formula $RIV_7$, the processor 300 determines the parameters L **and P by calculating the quotient** Q = *floor ( (R1V$_7$ - RIV$_{6\_max}$) /(N$_{RBG}$ -2 - TH))* **and the remainder** *R = ((RIV$_7$ - RIV$_{6-max}$)mod(N$_{REG}$-2-TH))* .

$$\text{If } Q + R \le N_{RBG} - 2 - TH,\ L = Q + TH + 1 \text{ and P=R.}$$

$$\text{If } Q + R > N_{RBG} - 2 - TH,\ L=N_{RBG}\text{-1-Q} \text{ and P=N}_{RBG}\text{-TH-R.}$$

M is identified as the third parameter transferred separately.

At next step S1453, the mobile station MS identifies the groups of resource blocks which correspond to the three parameters.

Naturally, many modifications can be made to the embodiments of the invention described above without departing from the scope of the present invention.

For example, the values taken by the information representative of the two parameters may be shifted by a predetermined value.

Supplementary bits may be added to signal either a shift or unbalanced cluster sizes.

All the concepts applied here at group of resource blocks level can be transposed to resource blocks or subcarrier level for other types of applications.

**Claims**

1. Method for determining information derived from first and second parameters among three parameters (M,N,L;P, L,M) which enable a mobile station (MS) to identify which resources of a wireless telecommunication network are allocated to the mobile station by a base station (BS) among a total number of resources $N_{RBG}$, said resources being subcarriers or resource blocks in the frequency domain, the allocated resources being divided in a first cluster of at least one resource and a second cluster of at least one resource, the first and second clusters being non contiguous and comprising the same number of resources, the method being performed by the base station, the method comprising the steps of:

   - comparing the value of one of the parameters to another value,
   - selecting (S702) one method among first, and second methods indicating different values that can take information derived from the first and second parameters, which enable the mobile station to identify which resources are allocated to the mobile station, on the basis of the comparing,
   - determining (S703) the information from the selected method, the first and second parameters and from the total number of resources,
   - transferring (S705) the determined information and a third parameter to the mobile station,

   **characterised in that**, in the first method, the first parameter is the number (M) of resources in each cluster, the second parameter is the index (N) of the first resource allocated to the mobile station and the third parameter is the number (L) of resources separating the clusters
   and **in that**, in the second method, the first parameter is the number (L) of resources separating the clusters, the second parameter is the index (P) of the first resource separating the two clusters and the third parameter is the number (M) of resources in each cluster,
   and **in that** the parameter compared to the other value is the number (L) of resources separating the clusters and said other value is number (M) of resources in each cluster,
   and **in that** the method for determining said information further comprises transferring information indicating which method among the first and second methods is selected.

2. Method according to claim 1, **characterized in that** the first method is selected among two methods on the basis of whether the total number of resources $N_{RBG}$ is odd or even.

3. Method for determining first and second parameters among three parameters (M,N,L;P,L,M) which enable a mobile station (MS) to identify which resources of a wireless telecommunication network are allocated to the mobile station by a base station (BS) among a total number of resources $N_{RBG}$, said resources being subcarriers or resource blocks in the frequency domain, the allocated resources being divided in a first cluster of at least one resource and a second cluster of at least one resource, the first and second clusters being non contiguous and comprising the same number of resources, the method being executed by the mobile station, the method comprising the steps of :

   - receiving (S1400) the third parameter and information derived from the first and second parameters,
   - selecting (S 1402) one method among first and second methods indicating different values that can take information derived from the first and second parameters,
   - determining (S1403) the first and second parameters from the information, the total number of resources and the selected method,
   - identifying (S1404) the allocated resources from the first, second and third parameters,

   **characterized in that**, in the first method, the first parameter is the number (M) of resources in each cluster, the second parameter is the index (N) of the first resource allocated to the mobile station and the third parameter is the number (L) of resources separating the clusters,

and **in that**, in the second method, the first parameter is the number (L) of resources separating the clusters, the second parameter is the index (P) of the first resource separating the two clusters and the third parameter is the number (M) of resources in each cluster,

and **in that** said method among first and second methods is selected from received information indicating which method among the first and second methods is selected.

4. Method according to claim 3, **characterized in that** the first method is selected among two methods on the basis of whether the total number of resources $N_{RBG}$ is odd or even.

5. Device for determining information derived from first and second parameters among three parameters (M,N,L;P,L, M) which enable a mobile station (MS) to identify which resources of a wireless telecommunication network are allocated to the mobile station by a base station (BS) among a total number of resources $N_{RBG}$, said resources being subcarriers or resource blocks in the frequency domain, the allocated resources being divided in a first cluster of at least one resource and a second cluster of at least one resource, the first and second clusters being non contiguous and comprising the same number of resources, the device for determining information comprising:

- means for comparing the value of one of the parameters to another value,
- means for selecting one method among first and second methods indicating different values that can take information derived from the first and second parameters which enable the mobile station to identify which resources are allocated to the mobile station, on the basis of the comparing,
- means for determining the information from the selected method, the first and second parameters and from the total number of resources,
- means for transferring the determined information and a third parameter to the mobile station,

**characterised in that**, in the first method, the first parameter is the number (M) of resources in each cluster, the second parameter is the index (N) of the first resource allocated to the mobile station and the third parameter is the number (L) of resources separating the clusters,

and **in that**, in the second method, the first parameter is the number (L) of resources separating the clusters, the second parameter is the index (P) of the first resource separating the two clusters and the third parameter is the number (M) of resources in each cluster,

and **in that** the parameter compared to the other value is the number (L) of resources separating the clusters and said other value is number (M) of resources in each cluster,

and **in that** said device further comprises means for transferring information indicating which method among the first and second methods is selected.

6. Device according to claim 5, **characterized in that** it comprises means for selecting the first method among two methods on the basis of whether the total number of resources $N_{RBG}$ is odd or even.

7. Device for determining first and second parameters among three parameters (M,N,L;P,L,M) which enable a mobile station (MS) to identify which resources of a wireless telecommunication network are allocated to the mobile station by a base station (BS) among a total number of resources $N_{RBG}$, said resources being subcarriers or resource blocks in the frequency domain, the allocated resources being divided in a first cluster of at least one resource and a second cluster of at least one resource, the first and second clusters being non contiguous and comprising the same number of resources, the device for determining the first and the second parameters being included in the mobile station and comprising:

- means for receiving the third parameter and information derived from the first and second parameters,
- means for selecting one method among first and second methods indicating different values that can take information derived from the first and second parameters,
- means for determining the first and second parameters from the information, the total number of resources and the selected method,
- means for identifying the allocated resources from the first, second and third parameters,

**characterized in that**, in the first method, the first parameter is the number (M) of resources in each cluster, the second parameter is the index (N) of the first resource allocated to the mobile station and the third parameter is the number (L) of resources separating the clusters,

and **in that**, in the second method, the first parameter is the number (L) of resources separating the clusters, the second parameter is the index (P) of the first resource separating the two clusters and the third parameter is the number (M) of resources in each cluster

and **in that** said means for selecting one method among first and second methods are adapted to select said method from received information indicating which method among the first and second methods is selected.

8. Device according to claim 7, **characterized in that** it comprises means for selecting the first method among two methods on the basis of whether the total number of resources $N_{RBG}$ is odd or even.

9. Method for determining information derived from first and second parameters among three parameters (M,N,L;P,L,M) which enable a mobile station (MS) to identify which resources of a wireless telecommunication network are allocated to the mobile station by a base station (BS) among a total number of resources $N_{RBG}$, said resources being subcarriers or resource blocks in the frequency domain, the allocated resources being divided in a first cluster of at least one resource and a second cluster of at least one resource, the first and second clusters being non contiguous and comprising the same number of resources, the method being performed by the base station, the method comprising the steps of:

   - comparing the value of one of the parameters to another value,
   - selecting (S752) one method among first and second methods indicating different values that can take information derived from the first and second parameters which enable the mobile station to identify which resources are allocated to the mobile station, on the basis of the comparing, wherein each value of the information derived from the first and second parameters corresponds univocally to one method among said first and second methods,
   - determining (S753) the information from the selected method, the first and second parameters and from the total number of resources,
   - transferring (S754) the determined information and the third parameter to the mobile station,

   **characterised in that**, in the first method, the first parameter is the number (M) of resources in each cluster, the second parameter is the index (N) of the first resource allocated to the mobile station and the third parameter is the number (L) of resources separating the clusters

   and **in that**, in the second method, the first parameter is the number (L) of resources separating the clusters, the second parameter is the index (P) of the first resource separating the two clusters and the third parameter is the number (M) of resources in each cluster,

   and **in that** the parameter compared to the other value is the number (L) of resources separating the clusters and said other value is a predefined threshold (TH).

10. Method according to claim 9, **characterized in that** the first method is selected among two methods on the basis of whether the total number of resources $N_{RBG}$ is odd or even.

11. Method for determining first and second parameters among three parameters (M,N,L;P,L,M) which enable a mobile station (MS) to identify which resources of a wireless telecommunication network are allocated to the mobile station by a base station (BS) among a total number of resources $N_{RBG}$, said resources being subcarriers or resource blocks in the frequency domain, the allocated resources being divided in a first cluster of at least one resource and a second cluster of at least one resource, the first and second clusters being non contiguous and comprising the same number of resources, the method being executed by the mobile station, the method comprising the steps of :

   - receiving (S1450) the third parameter and information derived from the first and second parameters,
   - selecting (S1451) one method among first and second methods indicating different values that can take information derived from the first and second parameters,
   - determining (S 1452) the first and second parameters from the information, the total number of resources and the selected method,
   - identifying (S1453) the allocated resources from the first, second and third parameters,

   **characterized in that**, in the first method, the first parameter is the number (M) of resources in each cluster, the second parameter is the index (N) of the first resource allocated to the mobile station and the third parameter is the number (L) of resources separating the clusters,

   and **in that**, in the second method, the first parameter is the number (L) of resources separating the clusters, the second parameter is the index (P) of the first resource separating the two clusters and the third parameter is the number (M) of resources in each cluster,
and **in that** said method among first and second methods is selected on the basis of the information derived from the first and second parameters.

**12.** Method according to claim 11, **characterized in that** the first method is selected among two methods on the basis of whether the total number of resources $N_{RBG}$ is odd or even.

**13.** Device for determining information derived from first and second parameters among three parameters (M,N,L;P,L,M) which enable a mobile station (MS) to identify which resources of a wireless telecommunication network are allocated to the mobile station by a base station (BS) among a total number of resources $N_{RBG}$, said resources being subcarriers or resource blocks in the frequency domain, the allocated resources being divided in a first cluster of at least one resource and a second cluster of at least one resource, the first and second clusters being non contiguous and comprising the same number of resources, the device for determining information comprising:

- means for comparing the value of one of the parameters to another value,
- means for selecting one method among first and second methods indicating different values that can take information derived from the first and second parameters which enable the mobile station to identify which resources are allocated to the mobile station, on the basis of the comparing, wherein each value of the information derived from the first and second parameters corresponds univocally to one method among said first and second methods,
- means for determining the information from the selected method, the first and second parameters and from the total number of resources,
- means for transferring the determined information and the third parameter to the mobile station,

**characterised in that**, in the first method, the first parameter is the number (M) of resources in each cluster, the second parameter is the index (N) of the first resource allocated to the mobile station and the third parameter is the number (L) of resources separating the clusters,
and **in that**, in the second method, the first parameter is the number (L) of resources separating the clusters, the second parameter is the index (P) of the first resource separating the two clusters and the third parameter is the number (M) of resources in each cluster,
and **in that** the parameter compared to the other value is the number (L) of resources separating the clusters and said other value is a predefined threshold (TH).

**14.** Device according to claim 13, **characterized in that** it comprises means for selecting the first method among two methods on the basis of whether the total number of resources $N_{RBG}$ is odd or even.

**15.** Device for determining first and second parameters among three parameters (M,N,L;P,L,M) which enable a mobile station (MS) to identify which resources of a wireless telecommunication network are allocated to the mobile station by a base station (BS) among a total number of resources $N_{RBG}$, said resources being subcarriers or resource blocks in the frequency domain, the allocated resources being divided in a first cluster of at least one resource and a second cluster of at least one resource, the first and second clusters being non contiguous and comprising the same number of resources, the device for determining the first and the second parameters being included in the mobile station and comprising:

- means for receiving the third parameter and information derived from the first and second parameters,
- means for selecting one method among first and second methods indicating different values that can take information derived from the first and second parameters,
- means for determining the first and second parameters from the information, the total number of resources and the selected method,
- means for identifying the allocated resources from the first, second and third parameters,

**characterized in that**, in the first method, the first parameter is the number (M) of resources in each cluster, the second parameter is the index (N) of the first resource allocated to the mobile station and the third parameter is the number (L) of resources separating the clusters,
and **in that**, in the second method, the first parameter is the number (L) of resources separating the clusters, the second parameter is the index (P) of the first resource separating the two clusters and the third parameter is the number (M) of resources in each cluster,
and **in that** said means for selecting one method among first and second methods are adapted to select said method on the basis of the information derived from the first and second parameters.

16. Device according to claim 15, **characterized in that** it comprises means for selecting the first method among two methods on the basis of whether the total number of resources $N_{RBG}$ is odd or even.

**Patentansprüche**

1. Verfahren zum Bestimmen von Information, die aus einem ersten und einem zweiten Parameter unter drei Parametern (M, N, L; P, L, M) abgeleitet sind, die ermöglichen, dass eine mobile Station (MS) identifiziert, welche Betriebsmittel eines drahtlosen Telekommunikationsnetzwerks der mobilen Station durch eine Basisstation (BS) unter einer Gesamtanzahl von Betriebsmitteln $N_{RBG}$ zugeteilt sind, wobei die Betriebsmittel Hilfsträger oder Betriebsmittelblöcke im Frequenzbereich sind, wobei die zugeteilten Betriebsmittel in eine erste Gruppe von wenigstens einem Betriebsmittel und eine zweite Gruppe von wenigstens einem Betriebsmittel aufgeteilt sind, wobei die erste und die zweite Gruppe nicht benachbart sind und dieselbe Anzahl von Betriebsmitteln aufweisen, wobei das Verfahren durch die Basisstation durchgeführt wird, wobei das Verfahren die folgenden Schritte aufweist:

   - Vergleichen des Werts von einem der Parameter mit einem anderen Wert,
   - Auswählen (S702) von einem Verfahren unter einem ersten und einem zweiten Verfahren, die unterschiedliche Werte anzeigen, die Information annehmen können, die aus dem ersten und dem zweiten Parameter abgeleitet ist, die ermöglichen, dass die mobile Station identifiziert, welche Betriebsmittel der mobilen Station zugeteilt sind, auf der Basis des Vergleichens,
   - Bestimmen (S703) der Information aus dem ausgewählten Verfahren, dem ersten und dem zweiten Parameter und aus der Gesamtanzahl von Betriebsmitteln,
   - Transferieren (S705) der bestimmten Information und eines dritten Parameters zu der mobilen Station,

   **dadurch gekennzeichnet, dass** bei dem ersten Verfahren der erste Parameter die Anzahl (M) von Betriebsmitteln in jeder Gruppe ist, der zweite Parameter der Index (N) des zu der mobilen Station zugeteilten ersten Betriebsmittels ist und der dritte Parameter die Anzahl (L) von Betriebsmitteln ist, die die Gruppen trennen,
   und dass bei dem zweiten Verfahren der erste Parameter die Anzahl (L) von Betriebsmitteln ist, die die Gruppen trennen, der zweite Parameter der Index (P) des ersten Betriebsmittels ist, das die zwei Gruppen trennt, und der dritte Parameter die Anzahl (M) von Betriebsmitteln in jeder Gruppe ist,
   und dass der mit dem anderen Wert verglichene Parameter die Anzahl (L) von Betriebsmitteln ist, die die Gruppen trennen, und der andere Wert eine Anzahl (M) von Betriebsmitteln in jeder Gruppe ist,
   und dass das Verfahren zum Bestimmen der Information weiterhin ein Transferieren von Information aufweist, die anzeigt, welches Verfahren unter dem ersten und dem zweiten Verfahren ausgewählt ist.

2. Verfahren nach Anspruch 1, **dadurch gekennzeichnet, dass** das erste Verfahren unter zwei Verfahren auf der Basis davon ausgewählt wird, ob die Gesamtanzahl von Betriebsmitteln $N_{RBG}$ ungerade oder gerade ist.

3. Verfahren zum Bestimmen eines ersten und eines zweiten Parameters unter drei Parametern (M, N, L; P, L, M), die ermöglichen, das eine mobile Station (MS) identifiziert, welche Betriebsmittel eines drahtlosen Telekommunikationsnetzwerks der mobilen Station durch eine Basisstation (BS) unter einer Gesamtanzahl von Betriebsmitteln $N_{RBG}$ zugeteilt sind, wobei die Betriebsmittel Hilfsträger oder Betriebsmittelblöcke im Frequenzbereich sind, wobei die zugeteilten Betriebsmittel in eine erste Gruppe von wenigstens einem Betriebmittel und eine zweite Gruppe von wenigstens einem Betriebsmittel aufgeteilt sind, wobei die erste und die zweite Gruppe nicht benachbart sind und dieselbe Anzahl von Betriebsmitteln aufweisen, wobei das Verfahren durch die mobile Station ausgeführt wird, wobei das Verfahren die folgenden Schritte aufweist:

   - Empfangen (S1400) des dritten Parameters und von aus dem ersten und dem zweiten Parameter abgeleiteter Information,
   - Auswählen (S1402) von einem Verfahren unter einem ersten und einem zweiten Verfahren, die unterschiedliche Werte anzeigen, die aus dem ersten und dem zweiten Parameter abgeleitete Information annehmen können,
   - Bestimmen (S1403) des ersten und des zweiten Parameters aus der Information, der Gesamtanzahl von Betriebsmitteln und dem ausgewählten Verfahren,
   - Identifizieren (S1404) der zugeteilten Betriebsmittel aus dem ersten, dem zweiten und dem dritten Parameter,

   **dadurch gekennzeichnet, dass** bei dem ersten Verfahren der erste Parameter die Anzahl (M) von Betriebsmitteln in jeder Gruppe ist, der zweite Parameter der Index (N) des zu der mobilen Station zugeteilten ersten Betriebsmittels ist und der dritte Parameter die Anzahl (L) von Betriebsmitteln ist, die die Gruppen trennen, und dass bei dem zweiten Verfahren der erste Parameter die Anzahl (L) von Betriebsmitteln ist, die die Gruppen trennen, der zweite Parameter der Index (P) des ersten Betriebsmittels ist, das die zwei Gruppen trennt, und der dritte Parameter die Anzahl (M) von Betriebsmitteln in jeder Gruppe ist, und dass das Verfahren unter einem ersten und einem zweiten Verfahren aus empfangener Information ausgewählt wird, die anzeigt, welches Verfahren unter dem ersten und dem zweiten Verfahren ausgewählt ist.

4. Verfahren nach Anspruch 3, **dadurch gekennzeichnet, dass** das erste Verfahren unter zwei Verfahren auf der Basis davon ausgewählt wird, ob die Gesamtanzahl von Betriebsmitteln $N_{RBG}$ ungerade oder gerade ist.

5. Vorrichtung zum Bestimmen von Information, die aus einem ersten und einem zweiten Parameter unter drei Parametern (M, N, L; P, L, M) abgeleitet ist, die ermöglichen, dass eine mobile Station (MS) identifiziert, welche Betriebsmittel eines drahtlosen Telekommunikationsnetzwerks der mobilen Station durch eine Basisstation (BS) unter einer Gesamtanzahl von Betriebsmitteln $N_{RBG}$ zugeteilt sind, wobei die Betriebsmittel Hilfsträger oder Betriebsmittelblöcke im Frequenzbereich sind, wobei die zugeteilten Betriebsmittel in eine erste Gruppe von wenigstens einem Betriebsmittel und eine zweite Gruppe von wenigstens einem Betriebsmittel aufgeteilt sind, wobei die erste und die zweite Gruppe nicht benachbart sind und dieselbe Anzahl von Betriebsmitteln aufweisen, wobei die Vorrichtung zum Bestimmen von Information folgendes aufweist:

- eine Einrichtung zum Vergleichen des Werts von einem der Parameter mit einem anderen Wert,
- eine Einrichtung zum Auswählen von einem Verfahren unter einem ersten und einem zweiten Verfahren, die unterschiedliche Werte anzeigen, die Information annehmen können, die aus dem ersten und dem zweiten Parameter abgeleitet ist, die ermöglichen, dass die mobile Station identifiziert, welche Betriebsmittel der mobilen Station zugeteilt sind, auf der Basis der Vergleichens,
- eine Einrichtung zum Bestimmen der Information aus dem ausgewählten Verfahren, dem ersten und dem zweiten Parameter und aus der Gesamtanzahl von Betriebsmitteln,
- eine Einrichtung zum Transferieren der bestimmten Information und eines dritten Parameters zu der mobilen Station,

**dadurch gekennzeichnet, dass** bei dem ersten Verfahren der erste Parameter die Anzahl (M) von Betriebsmitteln in jeder Gruppe ist, der zweite Parameter der Index (N) des zu der mobilen Station zugeteilten ersten Betriebsmittels ist und der dritte Parameter die Anzahl (L) von Betriebsmitteln ist, die die Gruppen trennen, und dass bei dem zweiten Verfahren der erste Parameter die Anzahl (L) von Betriebsmitteln ist, die die Gruppen trennen, der zweite Parameter der Index (P) des ersten Betriebsmittels ist, das die zwei Gruppen trennt, und der dritte Parameter die Anzahl (M) von Betriebsmitteln in jeder Gruppe ist, und dass der mit dem anderen Wert verglichene Parameter die Anzahl (L) von Betriebsmitteln ist, die die Gruppen trennen, und der andere Wert eine Anzahl (M) von Betriebsmitteln in jeder Gruppe ist, und dass die Vorrichtung weiterhin eine Einrichtung zum Transferieren von Information aufweist, die anzeigt, welches Verfahren unter dem ersten und dem zweiten Verfahren ausgewählt ist.

6. Vorrichtung nach Anspruch 5, **dadurch gekennzeichnet, dass** sie eine Einrichtung zum Auswählen des ersten Verfahrens unter zwei Verfahren auf der Basis davon, ob die Gesamtanzahl von Betriebsmitteln $N_{RBG}$ ungerade oder gerade ist, aufweist.

7. Vorrichtung zum Bestimmen eines ersten und eines zweiten Parameters unter drei Parametern (M, N, L; P, L, M), die ermöglichen, das eine mobile Station (MS) identifiziert, welche Betriebsmittel eines drahtlosen Telekommunikationsnetzwerks der mobilen Station durch eine Basisstation (BS) unter einer Gesamtanzahl von Betriebsmitteln $N_{RBG}$ zugeteilt sind, wobei die Betriebsmittel Hilfsträger oder Betriebsmittelblöcke im Frequenzbereich sind, wobei die zugeteilten Betriebsmittel in eine erste Gruppe von wenigstens einem Betriebmittel und eine zweite Gruppe von wenigstens einem Betriebsmittel aufgeteilt sind, wobei die erste und die zweite Gruppe nicht benachbart sind und dieselbe Anzahl von Betriebsmitteln aufweisen, wobei die Vorrichtung zum Bestimmen des ersten und des zweiten Parameters in der mobilen Station enthalten ist und folgendes aufweist:

- eine Einrichtung zum Empfangen des dritten Parameters und von aus dem ersten und dem zweiten Parameter abgeleiteter Information,
- eine Einrichtung zum Auswählen von einem Verfahren unter einem ersten und einem zweiten Verfahren, die unterschiedliche Werte anzeigen, die aus dem ersten und dem zweiten Parameter abgeleitete Information annehmen können,
- eine Einrichtung zum Bestimmen des ersten und des zweiten Parameters aus der Information, der Gesamtanzahl von Betriebsmitteln und dem ausgewählten Verfahren,
- eine Einrichtung zum Identifizieren der zugeteilten Betriebsmittel aus dem ersten, dem zweiten und dem dritten Parameter,

**dadurch gekennzeichnet, dass** bei dem ersten Verfahren der erste Parameter die Anzahl (M) von Betriebsmitteln in jeder Gruppe ist, der zweite Parameter der Index (N) des zu der mobilen Station zugeteilten ersten Betriebsmittels ist und der dritte Parameter die Anzahl (L) von Betriebsmitteln ist, die die Gruppen trennen,
und dass bei dem zweiten Verfahren der erste Parameter die Anzahl (L) von Betriebsmitteln ist, die die Gruppen trennen, der zweite Parameter der Index (P) des ersten Betriebsmittels ist, das die zwei Gruppen trennt, und der dritte Parameter die Anzahl (M) von Betriebsmitteln in jeder Gruppe ist,
und dass die Einrichtung zum Auswählen von einem Verfahren unter einem ersten und einem zweiten Verfahren dazu geeignet ist, das Verfahren aus empfangener Information auszuwählen, die anzeigt, welches Verfahren unter dem ersten und dem zweiten Verfahren ausgewählt ist.

8. Vorrichtung nach Anspruch 7, **dadurch gekennzeichnet, dass** sie eine Einrichtung zum Auswählen des ersten Verfahrens unter zwei Verfahren auf der Basis davon, ob die Gesamtanzahl von Betriebsmitteln $N_{RBG}$ ungerade oder gerade ist, aufweist.

9. Verfahren zum Bestimmen von Information, die aus einem ersten und einem zweiten Parameter unter drei Parametern (M, N, L; P, L, M) abgeleitet ist, die ermöglichen, dass eine mobile Station (MS) identifiziert, welche Betriebsmittel eines drahtlosen Telekommunikationsnetzwerks der mobilen Station durch eine Basisstation (BS) unter einer Gesamtanzahl von Betriebsmitteln $N_{RBG}$ zugeteilt sind, wobei die Betriebsmittel Hilfsträger oder Betriebsmittelblöcke im Frequenzbereich sind, wobei die zugeteilten Betriebsmittel in eine erste Gruppe von wenigstens einem Betriebsmittel und eine zweite Gruppe von wenigstens einem Betriebsmittel aufgeteilt sind, wobei die erste und die zweite Gruppe nicht benachbart sind und dieselbe Anzahl von Betriebsmitteln aufweisen, wobei das Verfahren durch die Basisstation durchgeführt wird, wobei das Verfahren die folgenden Schritte aufweist:

   - Vergleichen des Werts von einem der Parameter mit einem anderen Wert;
   - Auswählen (S752) von einem Verfahren unter einem ersten und einem zweiten Verfahren, die unterschiedliche Werte anzeigen, die Information annehmen können, die aus dem ersten und dem zweiten Parameter abgeleitet ist, die ermöglichen, dass die mobile Station identifiziert, welche Betriebsmittel der mobilen Station zugeteilt sind, auf der Basis der Vergleichens, wobei jeder Wert der aus dem ersten und dem zweiten Parameter abgeleiteten Information eindeutig einem Verfahren unter dem ersten und dem zweiten Verfahren entspricht,
   - Bestimmen (S753) der Information aus dem ausgewählten Verfahren, dem ersten und dem zweiten Parameter und aus der Gesamtanzahl von Betriebsmitteln,
   - Transferieren (S754) der bestimmten Information und des dritten Parameters zu der mobilen Station,

   **dadurch gekennzeichnet, dass** bei dem ersten Verfahren der erste Parameter die Anzahl (M) von Betriebsmitteln in jeder Gruppe ist, der zweite Parameter der Index (N) des zu der mobilen Station zugeteilten ersten Betriebsmittels ist und der dritte Parameter die Anzahl (L) von Betriebsmitteln ist, die die Gruppen trennen,
   und dass bei dem zweiten Verfahren der erste Parameter die Anzahl (L) von Betriebsmitteln ist, die die Gruppen trennen, der zweite Parameter der Index (P) des ersten Betriebsmittels ist, das die zwei Gruppen trennt, und der dritte Parameter die Anzahl (M) von Betriebsmitteln in jeder Gruppe ist,
   und dass der mit dem anderen Wert verglichene Parameter die Anzahl (L) von Betriebsmitteln ist, die die Gruppen trennen, und der andere Wert eine vordefinierte Schwelle (TH) ist.

10. Verfahren nach Anspruch 9, **dadurch gekennzeichnet, dass** das erste Verfahren unter zwei Verfahren auf der Basis davon ausgewählt wird, ob die Gesamtanzahl von Betriebsmitteln $N_{RBG}$ ungerade oder gerade ist.

11. Verfahren zum Bestimmen eines ersten und eines zweiten Parameters unter drei Parametern (M, N, L; P, L, M), die ermöglichen, dass eine mobile Station (MS) identifiziert, welche Betriebsmittel eines drahtlosen Telekommunikationsnetzwerks der mobilen Station durch eine Basisstation (BS) unter einer Gesamtanzahl von Betriebsmitteln $N_{RBG}$ zugeteilt sind, wobei die Betriebsmittel Hilfsträger oder Betriebsmittelblöcke im Frequenzbereich sind, wobei die zugeteilten Betriebsmittel in eine erste Gruppe von wenigstens einem Betriebmittel und eine zweite Gruppe von wenigstens einem Betriebsmittel aufgeteilt sind, wobei die erste und die zweite Gruppe nicht benachbart sind und dieselbe Anzahl von Betriebsmitteln aufweisen, wobei das Verfahren durch die mobile Station ausgeführt wird, wobei das Verfahren die folgenden Schritte aufweist:

- Empfangen (S1450) des dritten Parameters und von aus dem ersten und dem zweiten Parameter abgeleiteter Information,
- Auswählen (S1451) von einem Verfahren unter einem ersten und einem zweiten Verfahren, die unterschiedliche Werte anzeigen, die aus dem ersten und dem zweiten Parameter abgeleitete Information annehmen können,
- Bestimmen (S1452) des ersten und des zweiten Parameters aus der Information, der Gesamtanzahl von Betriebsmitteln und dem ausgewählten Verfahren,
- Identifizieren (S1453) der zugeteilten Betriebsmittel aus dem ersten, dem zweiten und dem dritten Parameter,

**dadurch gekennzeichnet, dass** bei dem ersten Verfahren der erste Parameter die Anzahl (M) von Betriebsmitteln in jeder Gruppe ist, der zweite Parameter der Index (N) des zu der mobilen Station zugeteilten ersten Betriebsmittels ist und der dritte Parameter die Anzahl (L) von Betriebsmitteln ist, die die Gruppen trennen, und dass bei dem zweiten Verfahren der erste Parameter die Anzahl (L) von Betriebsmitteln ist, die die Gruppen trennen, der zweite Parameter der Index (P) des ersten Betriebsmittels ist, das die zwei Gruppen trennt, und der dritte Parameter die Anzahl (M) von Betriebsmitteln in jeder Gruppe ist, und dass das Verfahren unter einem ersten und einem zweiten Verfahren auf der Basis von der aus dem ersten und dem zweiten Parameter abgeleiteten Information ausgewählt wird.

12. Verfahren nach Anspruch 11, **dadurch gekennzeichnet, dass** das erste Verfahren unter zwei Verfahren auf der Basis davon ausgewählt wird, ob die Gesamtanzahl von Betriebsmitteln $N_{RBG}$ ungerade oder gerade ist.

13. Vorrichtung zum Bestimmen von Information, die aus einem ersten und einem zweiten Parameter unter drei Parametern (M, N, L; P, L, M) abgeleitet ist, die ermöglichen, dass eine mobile Station (MS) identifiziert, welche Betriebsmittel eines drahtlosen Telekommunikationsnetzwerks der mobilen Station durch eine Basisstation (BS) unter einer Gesamtanzahl von Betriebsmitteln $N_{RBG}$ zugeteilt sind, wobei die Betriebsmittel Hilfsträger oder Betriebsmittelblöcke im Frequenzbereich sind, wobei die zugeteilten Betriebsmittel in eine erste Gruppe von wenigstens einem Betriebsmittel und eine zweite Gruppe von wenigstens einem Betriebsmittel aufgeteilt sind, wobei die erste und die zweite Gruppe nicht benachbart sind und dieselbe Anzahl von Betriebsmitteln aufweisen, wobei die Vorrichtung zum Bestimmen von Information folgendes aufweist:

- eine Einrichtung zum Vergleichen des Werts von einem der Parameter mit einem anderen Wert;
- eine Einrichtung zum Auswählen von einem Verfahren unter einem ersten und einem zweiten Verfahren, die unterschiedliche Werte anzeigen, die Information annehmen können, die aus dem ersten und dem zweiten Parameter abgeleitet ist, die ermöglichen, dass die mobile Station identifiziert, welche Betriebsmittel der mobilen Station zugeteilt sind, auf der Basis des Vergleichens, wobei jeder Wert der aus dem ersten und dem zweiten Parameter abgeleiteten Information eindeutig einem Verfahren unter dem ersten und dem zweiten Verfahren entspricht,
- eine Einrichtung zum Bestimmen der Information aus dem ausgewählten Verfahren, dem ersten und dem zweiten Parameter und aus der Gesamtanzahl von Betriebsmitteln,
- eine Einrichtung zum Transferieren der bestimmten Information und des dritten Parameters zu der mobilen Station,

**dadurch gekennzeichnet, dass** bei dem ersten Verfahren der erste Parameter die Anzahl (M) von Betriebsmitteln in jeder Gruppe ist, der zweite Parameter der Index (N) des zu der mobilen Station zugeteilten ersten Betriebsmittels ist und der dritte Parameter die Anzahl (L) von Betriebsmitteln ist, die die Gruppen trennen, und dass bei dem zweiten Verfahren der erste Parameter die Anzahl (L) von Betriebsmitteln ist, die die Gruppen trennen, der zweite Parameter der Index (P) des ersten Betriebsmittels ist, das die zwei Gruppen trennt, und der dritte Parameter die Anzahl (M) von Betriebsmitteln in jeder Gruppe ist, und dass der mit dem anderen Wert verglichene Parameter die Anzahl (L) von Betriebsmitteln ist, die die Gruppen trennen, und der andere Wert eine vordefinierte Schwelle (TH) ist.

14. Vorrichtung nach Anspruch 13, **dadurch gekennzeichnet, dass** sie eine Einrichtung zum Auswählen des ersten Verfahrens unter zwei Verfahren auf der Basis davon, ob die Gesamtanzahl von Betriebsmitteln $N_{RBG}$ ungerade oder gerade ist, aufweist.

15. Vorrichtung zum Bestimmen eines ersten und eines zweiten Parameters unter drei Parametern (M, N, L; P, L, M), die ermöglichen, das eine mobile Station (MS) identifiziert, welche Betriebsmittel eines drahtlosen Telekommunikationsnetzwerks der mobilen Station durch eine Basisstation (BS) unter einer Gesamtanzahl von Betriebsmitteln $N_{RBG}$ zugeteilt sind, wobei die Betriebsmittel Hilfsträger oder Betriebsmittelblöcke im Frequenzbereich sind, wobei die zugeteilten Betriebsmittel in eine erste Gruppe von wenigstens einem Betriebmittel und eine zweite Gruppe von wenigstens einem Betriebsmittel aufgeteilt sind, wobei die erste und die zweite Gruppe nicht benachbart sind und dieselbe Anzahl von Betriebsmitteln aufweisen, wobei die Vorrichtung zum Bestimmen des ersten und des zweiten Parameters in der mobilen Station enthalten ist und folgendes aufweist:

- eine Einrichtung zum Empfangen des dritten Parameters und von aus dem ersten und dem zweiten Parameter abgeleiteter Information,
- eine Einrichtung zum Auswählen von einem Verfahren unter einem ersten und einem zweiten Verfahren, die unterschiedliche Werte anzeigen, die aus dem ersten und dem zweiten Parameter abgeleitete Information annehmen können,
- eine Einrichtung zum Bestimmen des ersten und des zweiten Parameters aus der Information, der Gesamtanzahl von Betriebsmitteln und dem ausgewählten Verfahren,
- eine Einrichtung zum Identifizieren der zugeteilten Betriebsmittel aus dem ersten, dem zweiten und dem dritten Parameter,

**dadurch gekennzeichnet, dass** bei dem ersten Verfahren der erste Parameter die Anzahl (M) von Betriebsmitteln in jeder Gruppe ist, der zweite Parameter der Index (N) des zu der mobilen Station zugeteilten ersten Betriebsmittels ist und der dritte Parameter die Anzahl (L) von Betriebsmitteln ist, die die Gruppen trennen, und dass bei dem zweiten Verfahren der erste Parameter die Anzahl (L) von Betriebsmitteln ist, die die Gruppen trennen, der zweite Parameter der Index (P) des ersten Betriebsmittels ist, das die zwei Gruppen trennt, und der dritte Parameter die Anzahl (M) von Betriebsmitteln in jeder Gruppe ist, und dass die Einrichtung zum Auswählen von einem Verfahren unter einem ersten, einem zweiten und einem dritten Verfahren dazu geeignet ist, das Verfahren auf der Basis von der aus dem ersten und dem zweiten Parameter abgeleiteten Information auszuwählen.

16. Vorrichtung nach Anspruch 15, **dadurch gekennzeichnet, dass** sie eine Einrichtung zum Auswählen des ersten Verfahrens unter zwei Verfahren auf der Basis davon, ob die Gesamtanzahl von Betriebsmitteln $N_{RBG}$ ungerade oder gerade ist, aufweist.


**Revendications**

1. Procédé pour déterminer une information dérivée de premier et second paramètres parmi trois paramètres (M,N, L;P,L,M) qui permettent à une station mobile (MS) d'identifier quelles ressources d'un réseau de télécommunication sans-fil sont allouées à la station mobile par une station de base (BS) parmi un nombre total de ressources $N_{RBG}$, lesdites ressources étant des sous-porteuses ou des blocs de ressources dans le domaine fréquentiel, les ressources allouées étant divisées en un premier bloc d'au moins une ressource et un second bloc d'au moins une ressource, les premier et second blocs étant non contigus et comprenant le même nombre de ressources, le procédé étant mis en oeuvre par la station de base, le procédé comprenant les étapes de :

- comparer la valeur d'un des paramètres à une autre valeur ;
- sélectionner (S702) un procédé parmi des premier et second procédés indiquant des valeurs différentes que peut prendre l'information dérivée des premier et second paramètres qui permettent à la station mobile d'identifier quelles ressources sont allouées à la station mobile, sur la base de la comparaison,
- déterminer (S703) l'information à partir du procédé sélectionné, des premier et second paramètres et du nombre total de ressources,
- transférer (S705) l'information déterminée et un troisième paramètre à la station mobile,

**caractérisé en ce que**, dans le premier procédé, le premier paramètre est le nombre (M) de ressources dans chaque bloc, le second paramètre est l'index (N) de la première ressource allouée à la station mobile et le troisième paramètre est le nombre (L) de ressources séparant les blocs, et **en ce que**, dans le second procédé, le premier paramètre est le nombre (L) de ressources séparant les blocs, le second paramètre est l'index (P) de la première ressource séparant les deux blocs et le troisième paramètre est le nombre (M) de ressources dans chaque bloc, et **en ce que** le paramètre comparé à l'autre valeur est le nombre (L) de ressources séparant les blocs et ladite autre valeur est le nombre (M) de ressources dans chaque bloc,

et **en ce que** le procédé pour déterminer ladite information comprend en outre :

- transférer une information indiquant quel procédé parmi les premier et second procédés est sélectionné.

2. Procédé selon la revendication 1, **caractérisé en ce que** le premier procédé est sélectionné parmi deux procédés sur la base de si le nombre total de ressources $N_{RBG}$ est impair ou pair.

3. Procédé pour déterminer des premier et second paramètres parmi trois paramètres (M,N,L;P,L,M) qui permettent à une station mobile (MS) d'identifier quelles ressources d'un réseau de télécommunication sans-fil sont allouées à la station mobile par une station de base (BS) parmi un nombre total de ressources $N_{RBG}$, lesdites ressources étant des sous-porteuses ou des blocs de ressources dans le domaine fréquentiel, les ressources allouées étant divisées en un premier bloc d'au moins une ressource et un second bloc d'au moins une ressource, les premier et second blocs étant non contigus et comprenant le même nombre de ressources, le procédé étant mis en oeuvre par la station mobile, le procédé comprenant les étapes de :

- recevoir (S 1400) le troisième paramètre et une information dérivée des premier et second paramètres,
- sélectionner (S1402) un procédé parmi des premier et second procédés indiquant des valeurs différentes que peut prendre l'information dérivée des premier et second paramètres,
- déterminer (S1403) les premier et second paramètres à partir de l'information, du nombre total de ressources et du procédé sélectionné,
- identifier (S1404) les ressources allouées à partir des premier, second et troisième paramètres,

**caractérisé en ce que**, dans le premier procédé, le premier paramètre est le nombre (M) de ressources dans chaque bloc, le second paramètre est l'index (N) de la première ressource allouée à la station mobile et le troisième paramètre est le nombre (L) de ressources séparant les blocs,
et **en ce que**, dans le second procédé, le premier paramètre est le nombre (L) de ressources séparant les blocs, le second paramètre est l'index (P) de la première ressource séparant les deux blocs et le troisième paramètre est le nombre (M) de ressources dans chaque bloc,
et **en ce que** ledit procédé parmi les premier et second procédés est sélectionné à partir de l'information reçue indiquant quel procédé parmi les premier et second procédés est sélectionné.

4. Procédé selon la revendication 3, **caractérisé en ce que** le premier procédé est sélectionné parmi deux procédés sur la base de si le nombre total de ressources $N_{RBG}$ est impair ou pair.

5. Dispositif pour déterminer une information dérivée de premier et second paramètres parmi trois paramètres (M,N, L;P,L,M) qui permettent à une station mobile (MS) d'identifier quelles ressources d'un réseau de télécommunication sans-fil sont allouées à la station mobile par une station de base (BS) parmi un nombre total de ressources $N_{RBG}$, lesdites ressources étant des sous-porteuses ou des blocs de ressources dans le domaine fréquentiel, les ressources allouées étant divisées en un premier bloc d'au moins une ressource et un second bloc d'au moins une ressource, les premier et second blocs étant non contigus et comprenant le même nombre de ressources, le dispositif pour déterminer l'information comprenant :

- des moyens pour comparer la valeur d'un des paramètres à une autre valeur ;
- des moyens pour sélectionner un procédé parmi des premier et second procédés indiquant des valeurs différentes que peut prendre l'information dérivée des premier et second paramètres qui permettent à la station mobile d'identifier quelles ressources sont allouées à la station mobile, sur la base de la comparaison,
- des moyens pour déterminer l'information à partir du procédé sélectionné, des premier et second paramètres et du nombre total de ressources,
- des moyens pour transférer l'information déterminée et un troisième paramètre à la station mobile,

**caractérisé en ce que**, dans le premier procédé, le premier paramètre est le nombre (M) de ressources dans chaque bloc, le second paramètre est l'index (N) de la première ressource allouée à la station mobile et le troisième paramètre est le nombre (L) de ressources séparant les blocs,
et **en ce que**, dans le second procédé, le premier paramètre est le nombre (L) de ressources séparant les blocs, le second paramètre est l'index (P) de la première ressource séparant les deux blocs et le troisième paramètre est le nombre (M) de ressources dans chaque bloc,
et **en ce que** le paramètre comparé à l'autre valeur est le nombre (L) de ressources séparant les blocs et ladite autre valeur est le nombre (M) de ressources dans chaque bloc,

et **en ce que** ledit dispositif comprend en outre des moyens pour transférer une information indiquant quel procédé parmi les premier et second procédés est sélectionné.

6. Dispositif selon la revendication 5, **caractérisé en ce qu'**il comprend des moyens pour sélectionner le premier procédé parmi deux procédés sur la base de si le nombre total de ressources $N_{RBG}$ est impair ou pair.

7. Dispositif pour déterminer des premier et second paramètres parmi trois paramètres (M,N,L;P,L,M) qui permettent à une station mobile (MS) d'identifier quelles ressources d'un réseau de télécommunication sans-fil sont allouées à la station mobile par une station de base (BS) parmi un nombre total de ressources $N_{RBG}$, lesdites ressources étant des sous-porteuses ou des blocs de ressources dans le domaine fréquentiel, les ressources allouées étant divisées en un premier bloc d'au moins une ressource et un second bloc d'au moins une ressource, les premier et second blocs étant non contigus et comprenant le même nombre de ressources, le dispositif pour déterminer les premier et second paramètres étant inclus dans la station mobile et comprenant :

   - des moyens pour recevoir le troisième paramètre et une information dérivée des premier et second paramètres,
   - des moyens pour sélectionner un procédé parmi des premier et second procédés indiquant des valeurs différentes que peut prendre l'information dérivée des premier et second paramètres,
   - des moyens pour déterminer les premier et second paramètres à partir de l'information, du nombre total de ressources et du procédé sélectionné,
   - des moyens pour identifier les ressources allouées à partir des premier, second et troisième paramètres,

   **caractérisé en ce que**, dans le premier procédé, le premier paramètre est le nombre (M) de ressources dans chaque bloc, le second paramètre est l'index (N) de la première ressource allouée à la station mobile et le troisième paramètre est le nombre (L) de ressources séparant les blocs,
   et **en ce que**, dans le second procédé, le premier paramètre est le nombre (L) de ressources séparant les blocs, le second paramètre est l'index (P) de la première ressource séparant les deux blocs et le troisième paramètre est le nombre (M) de ressources dans chaque bloc,
   et **en ce que** lesdits moyens pour sélectionner un procédé parmi les premier et second procédés est adapté pour sélectionner ledit procédé à partir de l'information reçue indiquant quel procédé parmi les premier et second procédés est sélectionné.

8. Dispositif selon la revendication 7, **caractérisé en ce qu'**il comprend des moyens pour sélectionner le premier procédé parmi deux procédés sur la base de si le nombre total de ressources $N_{RBG}$ est impair ou pair.

9. Procédé pour déterminer une information dérivée de premier et second paramètres parmi trois paramètres (M,N, L;P,L,M) qui permettent à une station mobile (MS) d'identifier quelles ressources d'un réseau de télécommunication sans-fil sont allouées à la station mobile par une station de base (BS) parmi un nombre total de ressources $N_{RBG}$, lesdites ressources étant des sous-porteuses ou des blocs de ressources dans le domaine fréquentiel, les ressources allouées étant divisées en un premier bloc d'au moins une ressource et un second bloc d'au moins une ressource, les premier et second blocs étant non contigus et comprenant le même nombre de ressources, le procédé étant mis en oeuvre par la station de base, le procédé comprenant les étapes de :

   - comparer la valeur d'un des paramètres à une autre valeur ;
   - sélectionner (S752) un procédé parmi des premier et second procédés indiquant des valeurs différentes que peut prendre l'information dérivée des premier et second paramètres qui permettent à la station mobile d'identifier quelles ressources sont allouées à la station mobile, sur la base de la comparaison, dans lequel chaque valeur de l'information dérivée des premier et second paramètres correspond de manière univoque à un procédé parmi les premier et second procédés,
   - déterminer (S753) l'information à partir du procédé sélectionné, des premier et second paramètres et du nombre total de ressources,
   - transférer (S754) l'information déterminée et un troisième paramètre à la station mobile,

   **caractérisé en ce que**, dans le premier procédé, le premier paramètre est le nombre (M) de ressources dans chaque bloc, le second paramètre est l'index (N) de la première ressource allouée à la station mobile et le troisième paramètre est le nombre (L) de ressources séparant les blocs,
   et **en ce que**, dans le second procédé, le premier paramètre est le nombre (L) de ressources séparant les blocs, le second paramètre est l'index (P) de la première ressource séparant les deux blocs et le troisième paramètre est le nombre (M) de ressources dans chaque bloc,

et **en ce que** le paramètre comparé à l'autre valeur est le nombre (L) de ressources séparant les blocs et ladite autre valeur est un seuil prédéfini (TH).

10. Procédé selon la revendication 9, **caractérisé en ce que** le premier procédé est sélectionné parmi deux procédés sur la base de si le nombre total de ressources $N_{RBG}$ est impair ou pair.

11. Procédé pour déterminer des premier et second paramètres parmi trois paramètres (M,N,L;P,L,M) qui permettent à une station mobile (MS) d'identifier quelles ressources d'un réseau de télécommunication sans-fil sont allouées à la station mobile par une station de base (BS) parmi un nombre total de ressources $N_{RBG}$, lesdites ressources étant des sous-porteuses ou des blocs de ressources dans le domaine fréquentiel, les ressources allouées étant divisées en un premier bloc d'au moins une ressource et un second bloc d'au moins une ressource, les premier et second blocs étant non contigus et comprenant le même nombre de ressources, le procédé étant mis en oeuvre par la station mobile, le procédé comprenant les étapes de :

- recevoir (S1450) le troisième paramètre et une information dérivée des premier et second paramètres,
- sélectionner (S1451) un procédé parmi des premier et second procédés indiquant des valeurs différentes que peut prendre l'information dérivée des premier et second paramètres,
- déterminer (S1452) les premier et second paramètres à partir de l'information, du nombre total de ressources et du procédé sélectionné,
- identifier (S1453) les ressources allouées à partir des premier, second et troisième paramètres,

**caractérisé en ce que**, dans le premier procédé, le premier paramètre est le nombre (M) de ressources dans chaque bloc, le second paramètre est l'index (N) de la première ressource allouée à la station mobile et le troisième paramètre est le nombre (L) de ressources séparant les blocs,
et **en ce que**, dans le second procédé, le premier paramètre est le nombre (L) de ressources séparant les blocs, le second paramètre est l'index (P) de la première ressource séparant les deux blocs et le troisième paramètre est le nombre (M) de ressources dans chaque bloc,
et **en ce que** ledit procédé parmi les premier et second procédés est sélectionné à partir de l'information dérivée des premier et second paramètres.

12. Procédé selon la revendication 11, **caractérisé en ce que** le premier procédé est sélectionné parmi deux procédés sur la base de si le nombre total de ressources $N_{RBG}$ est impair ou pair.

13. Dispositif pour déterminer une information dérivée de premier et second paramètres parmi trois paramètres (M,N, L;P,L,M) qui permettent à une station mobile (MS) d'identifier quelles ressources d'un réseau de télécommunication sans-fil sont allouées à la station mobile par une station de base (BS) parmi un nombre total de ressources $N_{RBG}$, lesdites ressources étant des sous-porteuses ou des blocs de ressources dans le domaine fréquentiel, les ressources allouées étant divisées en un premier bloc d'au moins une ressource et un second bloc d'au moins une ressource, les premier et second blocs étant non contigus et comprenant le même nombre de ressources, le dispositif pour déterminer l'information comprenant :

- des moyens pour comparer la valeur d'un des paramètres à une autre valeur ;
- des moyens pour sélectionner un procédé parmi des premier et second procédés indiquant des valeurs différentes que peut prendre l'information dérivée des premier et second paramètres qui permettent à la station mobile d'identifier quelles ressources sont allouées à la station mobile, sur la base de la comparaison, dans lequel chaque valeur de l'information dérivée des premier et second paramètres correspond de manière univoque à un procédé parmi les premier et second procédés,
- des moyens pour déterminer l'information à partir du procédé sélectionné, des premier et second paramètres et du nombre total de ressources,
- des moyens pour transférer l'information déterminée et un troisième paramètre à la station mobile,

**caractérisé en ce que**, dans le premier procédé, le premier paramètre est le nombre (M) de ressources dans chaque bloc, le second paramètre est l'index (N) de la première ressource allouée à la station mobile et le troisième paramètre est le nombre (L) de ressources séparant les blocs,
et **en ce que**, dans le second procédé, le premier paramètre est le nombre (L) de ressources séparant les blocs, le second paramètre est l'index (P) de la première ressource séparant les deux blocs et le troisième paramètre est le nombre (M) de ressources dans chaque bloc,
et **en ce que** le paramètre comparé à l'autre valeur est le nombre (L) de ressources séparant les blocs et ladite autre valeur est un seuil prédéfini (TH).

14. Dispositif selon la revendication 13, **caractérisé en ce qu'**il comprend des moyens pour sélectionner le premier procédé parmi deux procédés sur la base de si le nombre total de ressources $N_{RBG}$ est impair ou pair.

15. Dispositif pour déterminer des premier et second paramètres parmi trois paramètres (M,N,L;P,L,M) qui permettent à une station mobile (MS) d'identifier quelles ressources d'un réseau de télécommunication sans-fil sont allouées à la station mobile par une station de base (BS) parmi un nombre total de ressources $N_{RBG}$, lesdites ressources étant des sous-porteuses ou des blocs de ressources dans le domaine fréquentiel, les ressources allouées étant divisées en un premier bloc d'au moins une ressource et un second bloc d'au moins une ressource, les premier et second blocs étant non contigus et comprenant le même nombre de ressources, le dispositif pour déterminer les premier et second paramètre étant inclus dans la station mobile et comprenant :

- des moyens pour recevoir le troisième paramètre et une information dérivée des premier et second paramètres,
- des moyens pour sélectionner un procédé parmi des premier et second procédés indiquant des valeurs différentes que peut prendre l'information dérivée des premier et second paramètres,
- des moyens pour déterminer les premier et second paramètres à partir de l'information, du nombre total de ressources et du procédé sélectionné,
- des moyens pour identifier les ressources allouées à partir des premier, second et troisième paramètres,

**caractérisé en ce que**, dans le premier procédé, le premier paramètre est le nombre (M) de ressources dans chaque bloc, le second paramètre est l'index (N) de la première ressource allouée à la station mobile et le troisième paramètre est le nombre (L) de ressources séparant les blocs,
et **en ce que**, dans le second procédé, le premier paramètre est le nombre (L) de ressources séparant les blocs, le second paramètre est l'index (P) de la première ressource séparant les deux blocs et le troisième paramètre est le nombre (M) de ressources dans chaque bloc,
et **en ce que** lesdits moyens pour sélectionner un procédé parmi les premier et second procédés sont adaptés pour sélectionner ledit procédé à partir de l'information dérivée des premier et second paramètres.

16. Dispositif selon la revendication 13, **caractérisé en ce qu'**il comprend des moyens pour sélectionner le premier procédé parmi deux procédés sur la base de si le nombre total de ressources $N_{RBG}$ est impair ou pair.

BS

MS

## Fig. 1

BS

200 — Processor | Network I/F — 206

203 — RAM | Wireless I/F — 205

202 — ROM | 201

## Fig. 2

MS

300 — Processor | Wireless I/F — 305

303 — RAM

302 — ROM | 301

## Fig. 3

Fig. 4

Fig. 5

Fig. 6a

Fig. 6b

S700 — Allocate groups of resource blocks

S701 — Determine N/P, L M

S702 — Select one method of signalling

S703 — Apply selected method of signalling

S704 — Transfer information bit indicating selected method

S705 — Transfer information

Fig. 7a

S750 — Allocate groups of resource blocks

S751 — Determine N/P, L M

S752 — Select one method of signalling

S753 — Apply selected method of signalling

S754 — Transfer information

Fig. 7b

Fig. 8

Fig. 9

0   1   2   3   4   5   6   7   8   9   10

| 0 | 1 | 2 | 3 | 4 | 5 | 6 | 7 | 8 | 9 | 10 |
|---|---|---|---|---|---|---|---|---|---|----|
| 11 | 12 | 13 | 14 | 15 | 16 | 17 | 18 | 19 |  | 21 |
| 22 | 23 | 24 | 25 | 26 | 27 | 28 |  | 30 | 31 | 32 |
| 33 | 34 | 35 | 36 | 37 |  |  |  |  |  |  |

6   5

2   1   0

# Fig. 10a

1   2   3   4   5   6   7   8   9   10   11

| 0 | 1 | 2 | 3 | 4 | 5 | 6 | 7 | 8 | 9 | 10 |
|---|---|---|---|---|---|---|---|---|---|----|
| 11 | 12 | 13 | 14 | 15 | 16 | 17 | 18 | 19 | 20 | 21 |
| 22 | 23 | 24 | 25 | 26 | 27 | 28 | 29 | 30 | 31 | 32 |
| 33 | 34 | 35 | 36 | 37 | 38 | 39 | 40 | 41 | 42 | 43 |
| 44 | 45 | 46 | 47 | 48 | 49 | 50 | 51 | 52 | 53 | 54 |
| 55 | 56 | 57 | 58 | 59 | 60 | 61 | 62 | 63 | 64 | 65 |

11   10   9   8   7

5   4   3   2   1

# Fig. 10b

Fig. 11a

Fig. 11b

| 0 | 1 | 2 | 3 | 4 | 5 | 6 | 7 | 8 | 9 | 10 |
|---|---|---|---|---|---|---|---|---|---|---|
| 0 | 1 | 2 | 3 | 4 | 5 | 6 | 7 | 8 | 9 | 10 |
| 11 | 12 | 13 | 14 | 15 | 16 | 17 | 18 | 19 | | 21 |
| 22 | 23 | 24 | 25 | 26 | 27 | 28 | | 30 | 31 | 32 |
| 33 | 34 | 35 | 36 | 37 | | | | | | |

## Fig. 12a

TH

| 1 | 2 | 3 | | | | | | | | |
|---|---|---|---|---|---|---|---|---|---|---|
| 44 | 45 | 46 | | | | | | | | 54 |
| 55 | 56 | | | | | | | | | |

## Fig. 12b

| | 0 | 1 | 2 | 3 | 4 | 5 | 6 | 7 | 8 | 9 | 10 | |
|---|---|---|---|---|---|---|---|---|---|---|---|---|
| 1 | 0 | 1 | 2 | 3 | 4 | 5 | 6 | 7 | 8 | 9 | 10 | 11 | 6 |
| 2 | 12 | 13 | 14 | 15 | 16 | 17 | 18 | 19 | 20 | 21 | 22 | 23 | 5 |
| 3 | 24 | 25 | 26 | 27 | 28 | 29 | 30 | 31 | 32 | 33 | 34 | 35 | 4 |

## Fig. 13a

TH

| | 1 | 2 | 3 | |
|---|---|---|---|---|
| 9 | 36 | 37 | 38 | |
| 10 | 39 | 40 | 41 | 11 |

## Fig. 13b

S1400 — Receive information

S1401 — Receive information bit indicating the method

S1402 — Select method

S1403 — Determine N/P, L M

S1404 — Identify ressources

Fig. 14a

S1450 — Receive information

S1451 — Select method

S1452 — Determine N/P, L M

S1453 — Identify ressources

Fig. 14b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2136503 A
- WO 2009043208 A

**Non-patent literature cited in the description**

- 3rd Generation Partnership Project; Technical Specification Group Radio Access Network; Evolved Universal Terrestrial Access. *Physical layer procedures,* 01 September 2009
- Non-contiguous uplink resource allocation for LTE-A. *3GPP,* 12 October 2009
- Uplink non-contiguous resource allocation for LTE-Advanced, ZTE. *3GPP,* 12 October 2009